# EUROPEAN PATENT APPLICATION

(11) **EP 4 668 636 A1**
(43) Date of publication of application: **24.12.2025**
(21) Application number: 23921920.7
(22) Date of filing: 16.02.2023
(51) Int. Cl.: H04L 5/00

(54) **REFERENCE SIGNAL TRANSMISSION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2023/076625
(87) International publication number: WO 2024/168766

(57) **Abstract**

The present disclosure relates to the technical field of communications, and relates to a reference signal transmission method and apparatus, a communication device, and a storage medium, for use in improving the estimation accuracy of a phase noise source. The method comprises: determining that the maximum number of antenna groups of a terminal is 4, and determining that the maximum number of phase tracking reference signal (PTRS) ports is N, N being a positive integer; determining that downlink control information (DCI) does not comprise a PTRS-demodulation reference signal (DMRS) association indication domain and a transport layer indication (TRI) indicated by the DCI is greater than 1; determining an association between M PTRS ports corresponding to a PTRS reference signal actually sent by the terminal and DMRS ports, wherein M is a positive integer less than or equal to N; and sending the PTRS reference signal on the basis of the DMRS ports respectively associated with the M PTRS ports.

## Description

### TECHNICAL FIELD

The present disclosure relates to the field of communication technologies, and in particular to reference signal transmission methods and apparatuses, communication devices and storage media.

### BACKGROUND

In order to improve the effectiveness of transmission, high-order modulation is often used. The higher the modulation order, the more sensitive it is to phase noise. Usually, a terminal can send a reference signal, and a network device estimates the phase noise based on the reference signal.

### SUMMARY

The present disclosure provides reference signal transmission methods and apparatuses, communication devices and storage media.

According to a first aspect of an embodiment of the present disclosure, a reference signal transmission method is provided, which is performed by a terminal, and the method includes:
determining that a maximum number of antenna groups for the terminal is 4 and a maximum number of phase tracking reference signal (PTRS) ports is N, where N is a positive integer;
determining that downlink control information (DCI) does not include a PTRS-demodulation reference signal (DMRS) association indication field and a transmission rank indication (TRI) indicated by the DCI is greater than 1;
determining an association between M PTRS ports and DMRS ports, where the M PTRS ports are for the terminal actually transmitting PTRS reference signals, and M is a positive integer less than or equal to the N; and
sending one or more PTRS reference signals based on the DMRS ports respectively associated with the M PTRS ports.

In an implementation, the N is determined to be 4 and the M is determined to be 1, and the association between the M PTRS ports and the DMRS ports includes at least one of:
a number of codewords transmitted by the terminal is 1, and a PTRS port is associated with a DMRS port having a smallest DMRS port index among all of the DMRS ports;
a number of codewords transmitted by the terminal is 1, and a PTRS port is associated with a DMRS port having a smallest DMRS port index in a DMRS port group sharing the PTRS port;
a number of codewords transmitted by the terminal is 2, and a PTRS port is associated with a DMRS port having a smallest DMRS port index in a DMRS port group that shares the PTRS port and corresponds to a codeword with a higher modulation and coding style (MCS) level;
a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

In an implementation, the N is determined to be 4 and the M is greater than 1, and the association between the M PTRS ports and the DMRS ports includes at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

In an implementation, the M PTRS ports for the terminal actually transmitting PTRS reference signals are determined according to a transmission mode adopted by the terminal for uplink transmission, and the transmission mode adopted by the terminal for uplink transmission includes a codebook-based physical uplink shared channel (PUSCH) transmission or a non-codebook-based PUSCH transmission.

In an implementation, the transmission mode adopted by the terminal for uplink transmission includes a codebook-based PUSCH transmission, and the method further includes:
receiving transmission precoding matrix indicator (TPMI) information; and
determining the M PTRS ports based on one or more antenna port groups corresponding to actual transmission layers indicated by the TPMI information.

In an implementation, the transmission mode adopted by the terminal for uplink transmission includes a non-codebook-based PUSCH transmission, and the method further includes:
receiving sounding reference signal resource indicator (SRI) information; and
determining the M PTRS ports and DMRS port groups respectively corresponding to the M PTRS ports based on PTRS port indexes respectively corresponding to sounding reference signal (SRS) resources indicated by the SRI information.

In an embodiment, the method further includes:
sending capability information, where the capability information indicates that a maximum number of PTRS ports supported by the terminal is the N.

In an embodiment, the method further includes:
receiving configuration information, where the configuration information is used for configuring the maximum number of PTRS ports for the terminal.

In an implementation, a PUSCH type corresponding to an uplink transmission of the terminal includes at least one of:
scheduling-based PUSCH;
grant-free PUSCH type 1; or
grant-free PUSCH type 2.

According to a second aspect of an embodiment of the present disclosure, a reference signal transmission method is provided, which is performed by a network device, and the method includes:
determining that a maximum number of phase tracking reference signal (PTRS) ports is N and a number of PTRS ports for a terminal actually transmitting PTRS reference signals is M, where N is a positive integer and M is a positive integer less than or equal to the N;
sending downlink control information (DCI), where the DCI does not include a PTRS-demodulation reference signal (DMRS) association indication field and a transmission rank indication (TRI) indicated by the DCI is greater than 1;
determining an association between M PTRS ports and DMRS ports based on the DMRS ports respectively corresponding to the M PTRS ports; and
receiving one or more PTRS reference signals based on the DMRS ports respectively associated with the M PTRS ports.

In an implementation, the N is determined to be 4 and the M is determined to be 1, and the association between the M PTRS ports and the DMRS ports includes at least one of:
determining that a number of codewords transmitted by the terminal is 1, and a PTRS port is associated with a DMRS port having a smallest DMRS port index among all of the DMRS ports;
determining that a number of codewords transmitted by the terminal is 1, and a PTRS port is associated with a DMRS port having a smallest DMRS port index in a DMRS port group sharing the PTRS port;
determining that a number of codewords transmitted by the terminal is 2, and a PTRS port is associated with a DMRS port having a smallest DMRS port index in a DMRS port group sharing the PTRS port corresponding to a codeword with a higher modulation and coding style (MCS) level;
determining that a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

In an implementation, the N is determined to be 4 and the M is greater than 1, and the association between the M PTRS ports and the DMRS ports includes at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

In an embodiment, the method further includes:
determining that a transmission mode adopted by the terminal for uplink transmission is a codebook-based physical uplink shared channel (PUSCH) transmission, and sending transmission precoding matrix indicator (TPMI) information, where the TPMI information indicates the M PTRS ports.

In an embodiment, the method further includes:
determining that a transmission mode adopted by the terminal for uplink transmission is a non-codebook-based physical uplink shared channel (PUSCH) transmission, and sending sounding reference signal resource indicator (SRI) information, where the SRI information indicates the M PTRS ports and DMRS port groups respectively corresponding to the M PTRS ports.

In an embodiment, the method further includes:
receiving capability information, where the capability information indicates that a maximum number of PTRS ports supported by the terminal is the N.

In an embodiment, the method further includes:
sending configuration information, where the configuration information is used for configuring the maximum number of PTRS ports.

In an implementation, a PUSCH type corresponding to an uplink transmission of the terminal includes at least one of:
scheduling-based PUSCH;
grant-free PUSCH type 1; or
grant-free PUSCH type 2.

According to a third aspect of an embodiment of present disclosure, a first reference signal transmission apparatus is provided, which includes:
a processing module, configured to determine that a maximum number of antenna groups for the terminal is 4 and a maximum number of phase tracking reference signal (PTRS) ports is N, where N is a positive integer;
the processing module is further configured to determine that downlink control information (DCI) does not include a PTRS-demodulation reference signal (DMRS) association indication field and a transmission rank indication (TRI) indicated by the DCI is greater than 1;
the processing module is further configured to determine an association between M PTRS ports and DMRS ports, where the M PTRS ports are for the terminal actually transmitting PTRS reference signals, and M is a positive integer less than or equal to the N; and
a sending module, configured to send one or more PTRS reference signals based on the DMRS ports respectively associated with the M PTRS ports.

In an implementation, the N is determined to be 4 and the M is determined to be 1, and the association between the M PTRS ports and the DMRS ports includes at least one of:
a number of codewords transmitted by the terminal is 1, and a PTRS port is associated with a DMRS port having a smallest DMRS port index among all of the DMRS ports;
a number of codewords transmitted by the terminal is 1, and a PTRS port is associated with a DMRS port having a smallest DMRS port index in a DMRS port group sharing the PTRS port;
a number of codewords transmitted by the terminal is 2, and a PTRS port is associated with a DMRS port having a smallest DMRS port index in a DMRS port group that shares the PTRS port and corresponds to a codeword with a higher modulation and coding style (MCS) level;
a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

In an implementation, the N is determined to be 4 and the M is greater than 1, and the association between the M PTRS ports and the DMRS ports includes at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

In an implementation, the M PTRS ports for the terminal actually transmitting PTRS reference signals are determined according to a transmission mode adopted by the terminal for uplink transmission, and the transmission mode adopted by the terminal for uplink transmission includes a codebook-based physical uplink shared channel (PUSCH) transmission or a non-codebook-based PUSCH transmission.

In an implementation, the transmission mode adopted by the terminal for uplink transmission includes a codebook-based PUSCH transmission;
the receiving module is further configured to receive transmission precoding matrix indicator (TPMI) information; and
the processing module 101 is further configured to determine the M PTRS ports based on one or more antenna port groups corresponding to actual transmission layers indicated by the TPMI information.

In an implementation, the transmission mode adopted by the terminal for uplink transmission includes a non-codebook-based PUSCH transmission;
the receiving module is further configured to receive sounding reference signal resource indicator (SRI) information; and
the processing module is further configured to determine the M PTRS ports and DMRS port groups respectively corresponding to the M PTRS ports based on PTRS port indexes respectively corresponding to sounding reference signal (SRS) resources indicated by the SRI information.

In an implementation, the sending module is further configured to send capability information, where the capability information indicates that a maximum number of PTRS ports supported by the terminal is the N.

In an implementation, the receiving module is further configured to receive configuration information, where the configuration information is used for configuring the maximum number of PTRS ports for the terminal.

In an implementation, a PUSCH type corresponding to an uplink transmission of the terminal includes at least one of:
scheduling-based PUSCH;
grant-free PUSCH type 1; or
grant-free PUSCH type 2.

According to a fourth aspect of an embodiment of present disclosure, a second reference signal transmission apparatus is provided, which includes:
a processing module, configured to determine that a maximum number of phase tracking reference signal (PTRS) ports is N and a number of PTRS ports for a terminal actually transmitting PTRS reference signals is M, where N is a positive integer and M is a positive integer less than or equal to the N;
a sending module, configured to send downlink control information (DCI), where the DCI does not include a PTRS-demodulation reference signal (DMRS) association indication field and a transmission rank indication (TRI) indicated by the DCI is greater than 1;
the processing module is further configured to determine an association between M PTRS ports and DMRS ports based on the DMRS ports respectively corresponding to the M PTRS ports; and
the receiving module is configured to receive one or more PTRS reference signals based on the DMRS ports respectively associated with the M PTRS ports.

In an implementation, the N is determined to be 4 and the M is determined to be 1, and the association between the M PTRS ports and the DMRS ports includes at least one of:
determining that a number of codewords transmitted by the terminal is 1, and a PTRS port is associated with a DMRS port having a smallest DMRS port index among all of the DMRS ports;
determining that a number of codewords transmitted by the terminal is 1, and a PTRS port is associated with a DMRS port having a smallest DMRS port index in a DMRS port group sharing the PTRS port;
determining that a number of codewords transmitted by the terminal is 2, and a PTRS port is associated with a DMRS port having a smallest DMRS port index in a DMRS port group sharing the PTRS port corresponding to a codeword with a higher modulation and coding style (MCS) level;
determining that a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

In an implementation, the N is determined to be 4 and the M is greater than 1, and the association between the M PTRS ports and the DMRS ports includes at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

In an implementation, the processing module is further configured to determine that the transmission mode adopted by the terminal for uplink transmission is a codebook-based PUSCH transmission; and
the sending module is further configured to send transmission precoding matrix indicator (TPMI) information, where the TPMI information indicates the M PTRS ports.

In an implementation, the processing module is further configured to determine that the transmission mode adopted by the terminal for uplink transmission is a non-codebook-based PUSCH transmission; and
the sending module is further configured to send sounding reference signal resource indicator (SRI) information, where the SRI information indicates the M PTRS ports and DMRS port groups respectively corresponding to the M PTRS ports.

In an implementation, the receiving module is further configured to receive capability information, where the capability information indicates that a maximum number of PTRS ports supported by the terminal is the N.

In an implementation, the sending module is further configured to send configuration information, where the configuration information is used for configuring the maximum number of PTRS ports.

In an implementation, a PUSCH type corresponding to an uplink transmission of the terminal includes at least one of:
scheduling-based PUSCH;
grant-free PUSCH type 1; or
grant-free PUSCH type 2.

According to a fifth aspect of an embodiment of the present disclosure, a first communication device is provided, including: one or more processors; and a memory for storing processor-executable instructions; where the one or more processors are configured to perform the method as described in the first aspect and any one of its implementations.

According to a sixth aspect of an embodiment of the present disclosure, a second communication device is provided, including: one or more processors; and a memory for storing processor-executable instructions; where the one or more processors are configured to perform the method as described in the second aspect and any one of its implementations.

According to a seventh aspect of an embodiment of the present disclosure, a storage medium is provided, where instructions are stored in the storage medium, and when the instructions in the storage medium are executed by one or more processors of a terminal, the terminal can perform the method described in the first aspect and any one of its implementations; or, when the instructions in the storage medium are executed by one or more processors of a network device, the storage medium is enabled to perform the method as described in the above second aspect and any one of its implementations.

According to an eighth aspect of an embodiment of the present disclosure, a communication system is provided, including a terminal and a network device, where the terminal is configured to perform the method described in the first aspect and any one of its implementations; and the network device is configured to perform the method described in the second aspect and any one of its implementations.

The technical solution provided by the embodiments of the present disclosure may include the following beneficial effects: the terminal determines that the maximum number of antenna groups of the terminal is 4 and the maximum number of PTRS ports is N, determines that the DCI does not include a PTRS-DMRS association indication field and the transmission rank indication indicated by the DCI is greater than 1, and determines the association between the M PTRS ports and the DMRS ports, where the M PTRS ports are for the terminal actually transmitting PTRS reference signals, and M is a positive integer less than or equal to N; and the terminal sends one or more PTRS reference signals based on the DMRS ports respectively associated with the M PTRS ports. Therefore, when the terminal does not include a PTRS-DMRS association indication field in the DCI, it can also determine the association between the M PTRS ports for the terminal actually transmitting PTRS reference signals and the DMRS ports, thereby improving the estimation accuracy of the phase noise source under the multi-antenna panel.

It should be understood that the above general description and the following detailed descriptions are exemplary and explanatory only and do not limit the present disclosure.

### BRIEF DESCRIPTION OF DRAWINGS

The accompanying drawings, which are incorporated in and constitute a part of the specification, illustrate embodiments consistent with the present disclosure, and are used together with the specification to explain the principles of the present disclosure.
FIG. 1 is a schematic diagram of a wireless communication system according to an exemplary embodiment.
FIGS. 2A, 2B, 2C, 2D are schematic structural diagrams of a DMRS according to an exemplary embodiment.
FIG. 3 is a flowchart of a reference signal transmission method according to an exemplary embodiment.
FIG. 4 is a flowchart of a reference signal transmission method according to an exemplary embodiment.
FIG. 5 is a flowchart of a PTRS port determination method according to an exemplary embodiment.
FIG. 6 is a flowchart of a PTRS port determination method according to an exemplary embodiment.
FIG. 7 is a flowchart of a reference signal transmission method according to an exemplary embodiment.
FIG. 8 is a flowchart of a reference signal transmission method according to an exemplary embodiment.
FIG. 9 is a flowchart of a PTRS port determination method according to an exemplary embodiment.
FIG. 10 is a flowchart of a PTRS port determination method according to an exemplary embodiment.
FIG. 11 is a schematic diagram of a first reference signal transmission apparatus according to an exemplary embodiment.
FIG. 12 is a schematic diagram of a second reference signal transmission apparatus according to an exemplary embodiment.
FIG. 13 is a schematic diagram of a first communication device according to an exemplary embodiment.
FIG. 14 is a schematic diagram of a second communication device according to an exemplary embodiment.

### DETAILED DESCRIPTION

Reference will now be made in detail to exemplary embodiments, examples of which are illustrated in the accompanying drawings. When the following description refers to the accompanying drawings, unless otherwise indicated, the same numbers in different accompanying drawings indicate the same or similar elements. Implementations described in the following exemplary embodiments do not represent all embodiments consistent with the present disclosure.

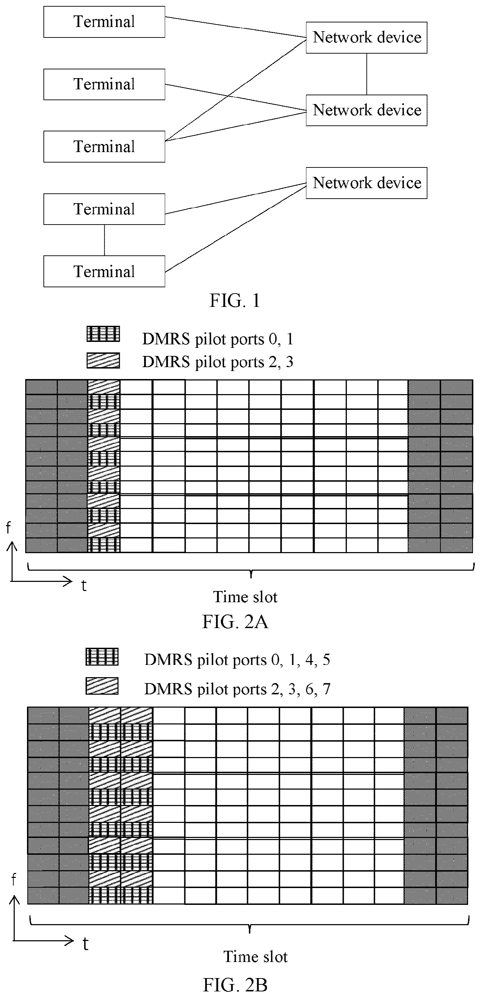

The reference signal transmission method provided by the embodiment of the present disclosure can be applied to a wireless communication system shown in FIG. 1. Referring to FIG. 1, the wireless communication system includes network devices and terminals. The terminals are connected to the network devices and can perform data transmission. In addition, terminals can also be connected to each other, and network devices can also be connected to each other.

It can be understood that the wireless communication system shown in FIG. 1 is only for schematic illustration, and the implementation or embodiment of the present disclosure may include all or part of the subjects in FIG. 1, and may also include other subjects other than FIG. 1, and the number of each subject is arbitrary and is not limited to FIG. 1. The connection relationships shown in FIG. 1 are only schematic illustrations. Any entities may be connected or disconnected. The connection may be in any manner, directly or indirectly, wired or wireless.

It can be further understood that the wireless communication system of the embodiments of the present disclosure is a network providing wireless communication functions. The wireless communication system can adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access with collision avoidance, etc. According to factors such as capacity, speed, delay of different networks, networks can be divided into 2-Generation (2G) networks, 3G networks, 4G networks or future evolution networks, such as 5G networks, which can also be called new radio (NR) networks. For ease of description, the present disclosure sometimes refers to a wireless communication network simply as a network.

Furthermore, a network device involved in the present disclosure may also be referred to as a radio access network device. The wireless access network device may be: a base station, an evolved node B, a home base station, an access point (AP), a wireless relay node, a wireless return node, a transmission point (TRP) or a transmission and reception point (TRP), etc., in wireless fidelity (WIFI) system, and it may further be a gNodeB (gNB) in a NR system, or, it may further be a component or a part of a device that constitutes a base station, etc. It should be understood that in the embodiments of the present disclosure, there is no limitation on specific technologies and specific device forms adopted by the network device. In the present disclosure, a network device may provide communication coverage for a specific geographic area and may communicate with terminals located within the coverage area (cell). In addition, when it is a vehicle-to-everything (V2X) communication system, the network device can further be a vehicle-mounted device.

Furthermore, a terminal involved in the present disclosure, which may also be referred to as a terminal device, a user equipment (UE), a mobile station (MS), a mobile terminal (MT), etc., is a device that provides voice and/or data connectivity to a user, e.g., the terminal may be a hand-held device, a vehicle-mounted device, etc., having wireless connectivity. At present, some examples of terminals are: mobile phone, customer front-end equipment, pocket personal computer (PPC), palmtop computer, personal digital assistant (PDA), notebook computer, tablet computer, wearable device, or vehicle-mounted device. In addition, when it is a vehicle networking (V2X) communication system, the terminal device can further be a vehicle-mounted device. It should be understood that the embodiments of the present disclosure do not limit specific technologies and specific device forms adopted by the terminal.

In order to improve the coverage at the cell edge and provide a more balanced service quality within the service area, data is transmitted collaboratively among multiple TRPs/panels in different ways. From the perspective of network configuration, it will be more beneficial to provide a balanced user experience rate by deploying a large number of distributed access points and baseband centralized processing, and significantly reduce the time delay and signaling overhead caused by handoff. Using the collaboration between multiple TRPs or panels to transmit/receive channels from multiple beams at multiple angles can better overcome various shielding/blocking effects and ensure the robustness of link connections. It is suitable for Ultra Reliable Low Latency Communication (URLLC) services to improve transmission quality and meet reliability requirements.

In an implementation, based on the application of multi-point coordinated transmission technology between downlink multiple TRPs/panels, the physical downlink shared channel (PDSCH) is enhanced for transmission. Since data transmission includes scheduling feedback for uplink and downlink channels, in the study of URLLC services, only enhancing the downlink data channel cannot guarantee the overall service performance. Therefore, in the research of R17, the physical downlink control channel (PDCCH), physical uplink control channel (PUCCH) and physical uplink shared channel (PUSCH) will continue to be enhanced.

For PDSCH/PUSCH channels, a data layer of data transmission corresponds to a demodulation reference signal (DMRS) port used for demodulation. The design of data channel (PDSCH/PUSCH) DMRS in NR system mainly includes the following two types.

Front-load DMRS: In each scheduling time unit, the first appearance position of DMRS should be as close to the scheduling starting point as possible. The use of front-load DMRS helps the receiver to quickly estimate the channel and perform reception detection, which plays an important role in reducing latency and supporting self-contained structures. Depending on the total number of orthogonal DMRS ports, the front-load DMRS can occupy up to two consecutive orthogonal frequency division multiplexing (OFDM) symbols.

Additional DMRS: For low mobility scenarios, front-load DMRS can achieve channel estimation performance that meets demodulation requirements with lower overhead. However, the moving speed considered by NR system can reach up to 500km/h, and it faces such a large dynamic range of mobility. In addition to front-load DMRS, more DMRS symbols need to be inserted in the scheduling duration in order to meet the estimation accuracy of channel time-variability. To address this problem, the NR system uses a DMRS structure that combines front-load DMRS with additional DMRS with configurable time domain density. Each additional DMRS pattern is a repetition of a front-load DMRS.

In each scheduling time unit, if additional DMRS exists, the pattern of each group of additional DMRS is consistent with the front-load DMRS. Therefore, the pattern design of front-load DMRS is the basis of DMRS design. The design ideas of front-load DMRS are divided into two types, in which the first type (type 1) adopts the comb (COMB) + orthogonal cover code (OCC) structure, and the second type (type 2) is based on frequency division multiplexing (FDM) + OCC structure.

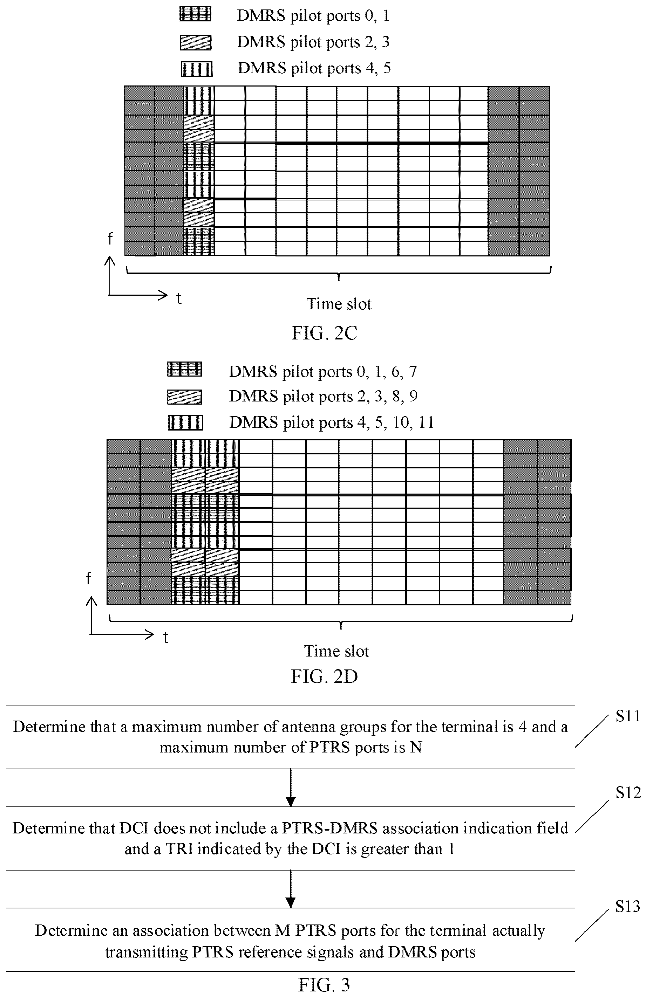

FIGS. 2A to 2D show schematic diagrams of the pattern design of front-load DMRS with two configuration types. FIG. 2A and FIG. 2B show schematic diagrams of DMRS pattern mapping of one OFDM symbol and two OFDM symbols corresponding to configuration type 1. FIG. 2C and FIG. 2D show schematic diagrams of DMRS pattern mapping of one OFDM symbol and two OFDM symbols corresponding to configuration type 2.

The number of DMRS ports depends on the number of orthogonal ports used for transmission, and the front-load DMRS can be configured as a maximum of two OFDM symbols. Considering the factor of power utilization efficiency, when using two-symbol front-load DMRS, on the basis of Circuit Switch (CS) or OCC in frequency domain, Time Division (TD)-OCC is used in time domain. Two types of front-load DMRS patterns are shown in FIG. 2.

In the medium/high-speed scene, in addition to front-load DMRS, more DMRS symbols need to be inserted in the scheduling duration in order to meet the estimation accuracy of channel time-variability. The NR system uses a DMRS structure that combines front-load DMRS with additional DMRS with configurable time domain density. Each additional DMRS pattern is a repetition of a front-load DMRS. Therefore, consistent with front-load DMRS, each group of additional DMRS can occupy at most two consecutive DMRS symbols. According to specific usage scenarios, at most three groups of additional DMRS can be configured in each scheduling. The number of Additional DMRS depends on a high-level parameter configuration and a specific scheduling duration.

In wireless communication systems, phase noise (PN) is caused by the execution of the local oscillator, which destroys the orthogonality of each subcarrier in the orthogonal frequency division multiplexing (OFDM) system, and this causes the common phase error (CPE), which causes the modulation constellation to rotate at a fixed angle and causes inter-carrier interference (ICI), which causes the scattering of the constellation points. This situation is more obvious at high frequencies. Since CPE has a greater impact, NR mainly considers compensating for CPE.

For high-frequency transmission, a sender needs to send a reference signal known to a receiver, such as a PTRS reference signal, based on which the receiver can estimate the phase noise and perform corresponding phase compensation. A PTRS port for sending the PTRS reference signal is associated with a DMRS antenna port. In order to improve the accuracy of phase noise estimation, the sender needs to map the PTRS port to the one with the best channel condition among quasi-co-located DMRS ports corresponding to it, and the receiver needs to know the specific DMRS port corresponding to the PTRS, otherwise the phase noise cannot be estimated using PTRS.

The number of PTRS ports is related to the number of phase noise sources. When there are multiple independent phase noise sources, each phase noise source requires a PTRS port to estimate its phase noise.

In an implementation of the present disclosure, one downlink PT-RS port and two uplink PT-RS ports are supported.

In an implementation of the present disclosure, whether to transmit PTRS in the uplink is controlled through the configuration of high-layer parameters. If the high-layer parameters do not configure a phase tracking reference signal (phaseTrackingRS) for the terminal in DMRS uplink configuration (DMRS-UplinkConfig), the terminal does not transmit PTRS during uplink transmission.

In another implementation of the present disclosure, if the high-level parameter configures "phaseTrackingRS" in "DMRS-UplinkConfig", the terminal transmits PTRS during uplink transmission. The maximum number of PTRS ports, which can be 1 or 2, is determined based on the configuration of the maximum number of PTRS ports (maxNrofPorts) specified in the higher-layer parameter "PTRS-UplinkConfig".

In an implementation of the present disclosure, if the maximum number of PTRS ports configured by the high-level parameters is 1, a PTRS-DMRS association indication field in downlink control information (single downlink control information, DCI) 0_1/0_2 indicates that a DMRS port is associated with the PTRS port. As shown in Table 1, the PTRS-DMRS association indication field, for example, a bit value of 0 indicates that the PTRS port is associated with the first scheduled DMRS port.

**Table 1**

| Bit value | DMRS port |
|---|---|
| 0 | First scheduled DMRS port |
| 1 | Second scheduled DMRS port |
| 2 | Third scheduled DMRS port |
| 3 | Fourth scheduled DMRS port |

In an implementation of the present disclosure, if the maximum number of PTRS ports configured by the high-level parameters is 2, the network device divides the DMRS ports into two groups through the DMRS ports corresponding to sounding reference signal (SRS) resources indicated by a sounding reference signal resource indicator (SRI), and establishes associations respectively. As shown in Table 2, a Most Significant 1 Bit is used to indicate one of the two DMRS ports sharing PTRS port 0 associated with the PTRS reference signal, and a Least Significant 1 Bit is used to indicate one of the two DMRS ports sharing PTRS port 1 associated with the PTRS reference signal.

**Table 2**

| Value of Most Significant Bit | DMRS port | | Value of Least Significant Bit | DMRS port |
|---|---|---|---|---|
| 0 | First DMRS port which shares PTRS port 0 | | 0 | First DMRS port which shares PTRS port 1 |
| 1 | Second DMRS port which shares PTRS port 0 | | 1 | Second DMRS port which shares PTRS port 1 |

In an implementation of the present disclosure, the uplink transmission mode includes two transmission modes: codebook-based transmission and non-codebook-based transmission, and different transmission modes correspond to different PTRS port indications.

The codebook-based transmission includes a codebook-based fully coherent transmission, a codebook-based partially coherent transmission, and a codebook-based non-coherent transmission.

The following describes the PTRS port indications corresponding to different transmission modes.
1. For codebook-based fully coherent transmission, two PTRS ports can be configured for uplink. If SRI selects one SRS resource, it means that all layers are transmitted from the same analog beam, so only one PTRS port is enough. If the terminal schedules multi-layer transmission, a field (which can be carried in DCI_0_1, for example) is required to indicate the association between PTRS and DMRS ports. The size of the field depends on the number of transmission antennas and Transmission Rank Indication (TRI). The DMRS port index and its associated PTRS port index are shown in Table 3.

**Table 3**

| Number of transmission antennas | TRI | PTRS-DMRS association indication field | DMRS Port Associated with PTRS Port |
|---|---|---|---|
| 2 | 2 | 0 | DMRS port corresponding to the first transmission layer |
| | | 1 | DMRS port corresponding to the second transmission layer |
| | 2 | 0 | DMRS port corresponding to the first transmission layer |
| | | 1 | DMRS port corresponding to the second transmission layer |
| | 3 | 00 | DMRS port corresponding to the first transmission layer |
| 4 | | 01 | DMRS port corresponding to the second transmission layer |
| | | 10 | DMRS port corresponding to the third transmission layer |
| | | 11 | Reserved |
| | 4 | 00 | DMRS port corresponding to the first transmission layer |
| | | 01 | DMRS port corresponding to the second transmission layer |
| | | 10 | DMRS port corresponding to the third transmission layer |
| | | 11 | DMRS port corresponding to the fourth transmission layer |

2. For codebook-based partially coherent transmission, and a codebook-based non-coherent transmission,
if SRI selects an SRS resource or Radio Resource Control (RRC) configures an SRS resource, and different SRS ports in the resource come from panels using different crystal oscillators, then two PTRS ports are required. When SRI only selects one SRS resource, if the indicated maximum number of PTRS ports is 1, then one PTRS port is used to transmit and correspond to one SRS resource, as shown in Table 2 above. If the indicated maximum number of PTRS ports is 2, the number of PTRS ports corresponding to the actual transmitted PTRS reference signal and its associated layers are determined by TPMI and/or TRI indication. As shown in Table 3 above, the ports of SRS resources are divided into two groups. The maximum number of PTRS ports is obtained by configuring maxNrofPorts in the high-level parameter PTRS-UplinkConfig to 'n2'. For example, in the indicated TPMI, SRS ports 0 and 2 share PTRS port 0, and in the indicated TPMI, SRS ports 1 and 3 share PT-RS port 1. If the number of layers indicated by TPMI in an SRS port group is 1 or 2, only one PTRS port needs to be scheduled, otherwise two PTRS ports need to be scheduled.
3. For non-codebook-based transmission

Using SRI in the DCI domain, up to 4 SRS ports can be indicated, and one SRI indicates one SRS resource (each SRS resource has one SRS port). One PTRS port index can be configured in each SRS resource. When transmitting multiple beams based on SRI indication, two PTRS ports are also needed. However, if some configured SRS resources contain the same PTRS port index, then these resources share a PT-RS port, and the corresponding DMRS are also associated with the same PTRS port. Therefore, the number of PTRS ports used in actual transmission is determined according to SRI.

In an exemplary implementation, Table 4 shows a TPMI table used to indicate a precoding matrix (Transmission Precoding matrix indicator, TPMI) and a number of transmission layers (Rank Indicator, RI) for codebook-based transmission.

**Table 4**

| Bit field mapped to index | *codebookSubset = fullyAndPartialAndNon Coherent* | Bit field mapped to index | *codebookSubset = partialAndNonCoherent* | Bit field mapped to index | *codebookSubset= nonCoherent* |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| ... | ... | ... | ... | ... | ... |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| | | | | ... | ... |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| ... | ... | ... | ... | | |
| 19 | 1 layer: TPMI=11 | 19 | 1 layer: TPMI=11 | | |
| 20 | 2 layers: TPMI=6 | 20 | 2 layers: TPMI=6 | | |
| ... | | | ... | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 31 | 4 layers: TPMI=2 | 31 | 4 layers: TPMI=2 | | |
| ... | ... | | | | |
| 47 | 1 layers: TPMI=27 | | | | |
| 48 | 2 layers: TPMI=14 | | | | |
| ... | ... | | | | |
| 55 | 2 layers: TPMI=21 | | | | |
| ... | ... | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

"Bit field mapped to index" represents the bit field mapped to the index, "codebookSubset" represents the codebook subset, and transmission capabilities of the codebook subset include: fullyAndPartialAndNonCoherent (fully coherent transmission), partialAndNonCoherent (partially coherent transmission), and nonCoherent (non-coherent transmission). Taking the above Table 6 as an example, Table 4 shows the precoding information and the number of layers in the codebook subsets corresponding to 4 antenna ports and a maximum rank of 2, 3, or 4.

In an exemplary implementation, Table 5 shows a table of the number of SRS resources in an SRS resource set indicated by SRI in non-codebook-based transmission.

**Table 5**

| Bit field mapped to index | SRI(s), *N*_{SRS} = 2 | Bit field mapped to index | SRI(s), *N*_{SRS} = 3 | Bit field mapped to index | SRI(s), *N*_{SRS} = 4 |
|---|---|---|---|---|---|
| 0 | 0 | 0 | 0 | 0 | 0 |
| 1 | 1 | 1 | 1 | 1 | 1 |
| 2 | 0,1 | 2 | 2 | 2 | 2 |
| 3 | reserved | 3 | 0,1 | 3 | 3 |
| | | 4 | 0,2 | 4 | 0,1 |
| | | 5 | 1,2 | 5 | 0,2 |
| | | 6 | 0,1,2 | 6 | 0,3 |
| | | 7 | reserved | 7 | 1,2 |
| | | | | 8 | 1,3 |
| | | | | 9 | 2,3 |
| | | | | 10 | 0,1,2 |
| | | | | 11 | 0,1,3 |
| | | | | 12 | 0,2,3 |
| | | | | 13 | 1,2,3 |
| | | | | 14 | 0,1,2,3 |
| | | | | 15 | reserved |

"Bit field mapped to index" represents the bit field mapped to the index, "codebookSubset" represents the codebook subset, and *"N*_{SRS}" represents the number of SRS resources in the SRS resource set indicated by the SRI. Taking the above Table 5 as an example, Table 7 shows the number of SRS resources in the SRS resource set indicated by the SRI corresponding to the maximum number of transmission layers being 4.

In an implementation of the present disclosure, when an uplink terminal is extended to a maximum of 8Tx transmission, the maximum number of data layers supported may be 8 layers, and the antenna structure of the terminal may also have different antenna port grouping situations. Therefore, the existing PTRS and DMRS port association also needs to be enhanced to support PTRS estimation of CPE in different scenarios. Currently, the maximum number of ports for PTRS is 2. However, if the number of antenna ports is greater than 2, the current PTRS design will be limited and more phase noise sources cannot be estimated. Therefore, it is possible to consider enhancing PTRS and the corresponding association indication between PTRS and DMRS during PUSCH transmission when the uplink terminal is extended to support up to 8Tx transmission.

FIG. 3 is a flowchart of a reference signal transmission method according to an exemplary embodiment. As shown in FIG. 3, the reference signal transmission method is performed by a terminal and includes the following steps.

At step S11, it is determined that a maximum number of antenna groups for the terminal is 4 and a maximum number of phase tracking reference signal (PTRS) ports is N.

In some embodiments, the number of antennas of the terminal is an inherent property of the terminal, and the terminal or network device can determine antenna grouping information based on the number of antennas of the terminal, and the terminal determines the number of antenna groups based on the antenna grouping information.

In some examples, the antenna grouping information may be fixedly stored in the terminal and the network device; or, the network device sends a signaling to the terminal, and informs the terminal of the antenna grouping information based on the signaling.

For example, the antenna grouping information is fixedly stored in the terminal and the network device. It can be understood that the terminal and the network device have negotiated the antenna grouping in advance and saved the antenna grouping information. The network device is also aware of the antenna grouping information. Therefore, the terminal directly reads the antenna grouping information stored locally and groups antennas according to the antenna grouping information.

In some embodiments, when the number of antenna groups is 1, the antennas are fully coherent with each other; when the number of antenna groups is 2, the antenna groups are incoherent with each other, and antennas within each antenna group are fully coherent, partially coherent, or incoherent with each other. When the number of antenna groups is 4, the antenna groups are incoherent with each other, and the antennas within each antenna group are fully coherent, partially coherent, or incoherent with each other.

In some embodiments, the maximum number of PTRS ports N is a positive integer, and the terminal determines the maximum number of PTRS ports based on at least one of the following methods: its own capabilities, network device configuration, and protocol specifications.

For example, the terminal determines the maximum number of PTRS ports it supports. For another example, the terminal determines the maximum number of PTRS ports based on configuration of the network device. For another example, the terminal determines the maximum number of PTRS ports based on the protocol specifications.

In a possible implementation, the terminal determines the maximum number of PTRS ports supported by itself, and reports the maximum number of PTRS ports supported by the terminal to the network device through capability information reporting.

In a possible implementation, the terminal receives configuration information sent by the network device, and determines the maximum number of PTRS ports based on the configuration information.

In a possible implementation, the terminal sends capability information, which is used to indicate the maximum number of PTRS ports supported by the terminal; the network device configures the maximum number of PTRS ports for the terminal based on the capability information and sends configuration information, and the terminal determines the maximum number of PTRS ports based on the configuration information.

It is worth noting that the maximum number of PTRS ports supported by the terminal and the maximum number of PTRS ports configured by the network device can be the same or different.

At step S12, it is determined that downlink control information (DCI) does not include a PTRS-demodulation reference signal (DMRS) association indication field and a transmission rank indication (TRI) indicated by the DCI is greater than 1.

In some embodiments, whether the DCI includes a PTRS-DMRS association indication field is determined based on a configuration of a first signaling. For example, the first signaling may be RRC signaling. For another example, the first signaling is mainly used to configure whether the DCI includes a PTRS-DMRS association indication field, which may be, for example, RRC signaling, but may also be other signaling, which is not limited in the embodiments of the present disclosure.

In some embodiments, the TRI is carried in the DCI. In other embodiments, the TRI is used to indicate the number of transmission layers, and TRI can also be carried in other signaling.

In a special case, when the TRI is 1, there is no need to determine the association between PTRS ports and DMRS ports, and a PTRS port corresponding to a PTRS reference signal sent by the terminal is associated with a DMRS port by default.

At step S13, an association between M PTRS ports for the terminal actually transmitting PTRS reference signals and DMRS ports is determined.

The terminal determines that the maximum number of PTRS ports is M, the number of M PTRS ports for the terminal actually transmitting PTRS reference signals is less than or equal to N, and M is a positive integer.

In some embodiments, the M PTRS ports for the terminal actually transmitting PTRS reference signals are determined according to a transmission mode adopted by the terminal for uplink transmission. In an implementation, the transmission mode adopted by the terminal for uplink transmission includes a codebook-based PUSCH transmission or a non-codebook-based PUSCH transmission.

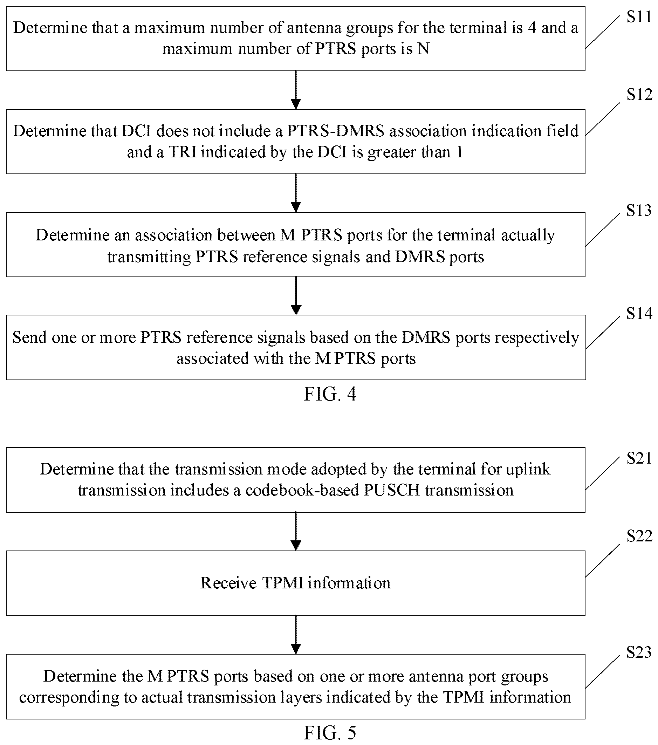

In some embodiments, the transmission mode adopted by the terminal for uplink transmission is the codebook-based PUSCH transmission, and the terminal can determine the M PTRS ports based on transmission precoding matrix indicator (TPMI) information. For example, the M PTRS ports are determined based on one or more antenna port groups corresponding to actual transmission layers indicated by the TPMI information. For details, please refer to the embodiment shown in FIG. 5, which will not be described in detail in the embodiments of the present disclosure.

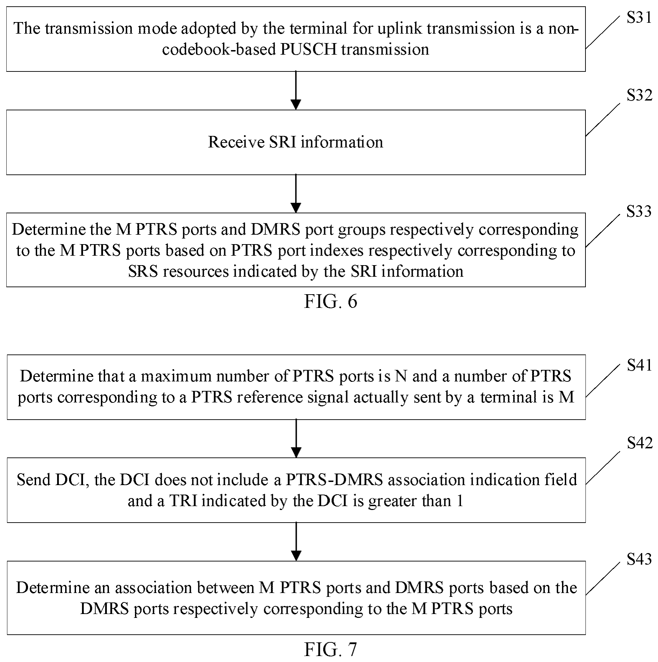

In some embodiments, the transmission mode adopted by the terminal for uplink transmission is the non-codebook-based PUSCH transmission, and the terminal can determine the M PTRS ports based on sounding reference signal resource indicator (SRI) information. For example, the M PTRS ports are determined based on PTRS port indexes respectively corresponding to sounding reference signal (SRS) resources indicated by the SRI information. For details, please refer to the embodiment shown in FIG. 6, which will not be described in detail in the embodiments of the present disclosure.

In some embodiments, the type of PUSCH corresponding to the uplink transmission of the terminal includes at least one of: scheduling-based PUSCH; grant-free PUSCH type 1; or grant-free PUSCH type 2.

In some embodiments, the terminal determines the association between the M PTRS ports and the DMRS ports based on a default rule.

In some embodiments, the terminal actually transmits the PTRS reference signals via to a single PTRS port, that is, M is 1. The association between the single PTRS port and a DMRS port can be determined based on the number of codewords (CWs) transmitted by the terminal.

In an implementation, the terminal in the embodiments of the present disclosure is equipped with 8 antennas, supports up to 8-layer transmission in the uplink, and supports a maximum of 2 codewords. In an implementation, the terminal transmits one codeword CW0 corresponding to 1-4 layers, and transmits to two codewords CW0 and CW1 corresponds to 5-8 layers.

For example, the default rule is that the number of codewords transmitted by the terminal is 1, and the single PTRS port is associated with a DMRS port having a smallest DMRS port index among all of the DMRS ports. For another example, when the default rule is that the number of codewords transmitted by the terminal is 2, the association between the single PTRS port and the DMRS port can be further determined based on the Modulation and Coding Style (MCS) level of codewords. For example, the default rule is that the number of codewords transmitted by the terminal is 2, and the single PTRS port is associated with a DMRS port having a smallest DMRS port index in a DMRS port group that shares the PTRS port and corresponds to a codeword with a higher MCS level. Of course, the association between the single PTRS port and the DMRS port is not limited to the aforementioned illustrative descriptions. Specific examples of the association between the single PTRS port and the DMRS port are provided below and will not be described in detail in the embodiment of the present disclosure.

In some examples, the number of codewords transmitted by the terminal indicates the number of codewords corresponding to PUSCH transmission by the terminal. Of course, in some embodiments, the number of codewords transmitted by the terminal can also indicate the number of codewords corresponding to transmission of other channels by the terminal. Here, the number of codewords transmitted by the terminal is explained in a unified way, which will not be described in detail below.

In some embodiments, the terminal actually transmits the PTRS reference signals via multiple PTRS ports, that is, M is greater than 1. The association between the M PTRS ports and the DMRS ports is determined based on a default rule. For example, the default rule may be that each of the M PTRS ports is associated with a DMRS port having a smallest DMRS port index in a DMRS port group sharing the each PTRS port. For another example, the default rule may be that each of the M PTRS ports is associated with a DMRS port corresponding to any fixed DMRS port index in a DMRS port group sharing the each PTRS port. Of course, the association between the M PTRS ports and the DMRS ports is not limited to the aforementioned illustrative descriptions. Specific examples of the association between the M PTRS ports and the DMRS ports are provided below and will not be described in detail in the embodiment of the present disclosure.

In the embodiment of the present disclosure, the terminal determines that the maximum number of antenna groups of the terminal is 4 and the maximum number of PTRS ports is N, determines that the DCI does not include a PTRS-DMRS association indication field and the transmission rank indication indicated by the DCI is greater than 1, and determines the association between the M PTRS ports for the terminal actually transmitting PTRS reference signals and the DMRS ports. Therefore, when the terminal does not include a PTRS-DMRS association indication field in the DCI, it can also determine the association between the M PTRS ports for the terminal actually transmitting PTRS reference signals and the DMRS ports, thereby improving the estimation accuracy of the phase noise source under the multi-antenna panel.

In the embodiments of the present disclosure, there is no strict sequential order for executing step S11 and step S12. In some embodiments, step S11 may be executed first, followed by step S12, while in other embodiments, step S12 may be executed first, followed by step S11. The embodiments of the present disclosure merely provide illustrative explanations and do not impose restrictions on the execution order of step S11 and step S12.

An embodiment of the present disclosure further provides a flowchart of a reference signal transmission method, as shown in FIG. 4, including the following steps.

At step S11, it is determined that a maximum number of antenna groups for the terminal is 4 and a maximum number of phase tracking reference signal (PTRS) ports is N.

At step S12, it is determined that downlink control information (DCI) does not include a PTRS-demodulation reference signal (DMRS) association indication field and a transmission rank indication (TRI) indicated by the DCI is greater than 1.

At step S13, an association between M PTRS ports for the terminal actually transmitting PTRS reference signals and DMRS ports is determined.

The specific implementation of step S11, step S12 and step S13 can refer to the specific implementation of step S11, step S12 and step S13 in FIG. 3, and the embodiment of the present disclosure will not be repeated here.

At step S14, one or more PTRS reference signals are sent based on the DMRS ports respectively associated with the M PTRS ports.

In some examples, the terminal sends one or more PTRS reference signals based on the DMRS ports respectively associated with the M PTRS ports. It can also be understood that the terminal transmits the PTRS reference signal via the DMRS ports respectively associated with the M PTRS ports.

In the embodiment of the present disclosure, the terminal sends one or more PTRS reference signals based on the DMRS ports respectively associated with the M PTRS ports, thereby improving the estimation accuracy of the phase noise source under the multi-antenna panel.

In the embodiments of the present disclosure, there is no strict sequential order for executing step S11 and step S12. In some embodiments, step S11 may be executed first, followed by step S12, while in other embodiments, step S12 may be executed first, followed by step S11. The embodiments of the present disclosure merely provide illustrative explanations and do not impose restrictions on the execution order of step S11 and step S12.

The association between the M PTRS ports and the DMRS ports is detailed below.

In a reference signal transmission method provided by an embodiment of the present disclosure, it is determined that the terminal actually transmits the PTRS reference signals via a single PTRS port, that is, M is 1, and an association between a PTRS port and a DMRS port can be determined based on the number of codewords transmitted by the terminal.

In some embodiments, the association between the PTRS port and the DMRS port includes at least one of the following:
(1) a number of codewords transmitted by the terminal is 1, and a PTRS port is associated with a DMRS port having a smallest DMRS port index among all of the DMRS ports;
(2) a number of codewords transmitted by the terminal is 1, and a PTRS port is associated with a DMRS port having a smallest DMRS port index in a DMRS port group sharing the PTRS port;
(3) a number of codewords transmitted by the terminal is 2, and a PTRS port is associated with a DMRS port having a smallest DMRS port index in a DMRS port group that shares the PTRS port and corresponds to a codeword with a higher modulation and coding style (MCS) level;
(4) a number of codewords transmitted by the terminal is 2 and MCS levels of different codewords are identical, and a PTRS port is associated with a DMRS port having a smallest DMRS port index in a DMRS port group corresponding to a first codeword CW0; or
(5) a number of codewords transmitted by the terminal is 1 or 2, and a PTRS port is associated with a DMRS port corresponding to any DMRS index in a DMRS port group sharing the PTRS port.

In an implementation, for the above association (1), the antenna group is 1, and the transmission between each antenna is fully coherent. For example, the PTRS port is associated with a DMRS port having a DMRS port index of "0".

In an implementation, for the above association (2), the antennas are grouped into 2 or 4, and the transmission between each antenna is partially coherent. For example, when the antennas are grouped into 2, each group includes 4 antennas, and a PTRS port is associated with a DMRS port having a DMRS port index of "0" in a DMRS port group that shares the PTRS port.

In some embodiments, the association between the PTRS port and the DMRS port includes at least one of the following:
(6) a number of codewords transmitted by the terminal is 1, and a PTRS port is associated with a DMRS port having a largest DMRS port index among all of the DMRS ports;
(7) a number of codewords transmitted by the terminal is 1, and a PTRS port is associated with a DMRS port having a largest DMRS port index in a DMRS port group sharing the PTRS port; or
(8) a number of codewords transmitted by the terminal is 2, and a PTRS port is associated with a DMRS port having a largest DMRS port index in a DMRS port group that shares the PTRS port and corresponds to a codeword with a higher MCS level.

In some embodiments, the association between the PTRS port and the DMRS port may further include: PTRS port cycling, that is, the PTRS port corresponding to each transmission of the PTRS reference signal is corresponding to different DMRS ports based on the order of DMRS port indexes.

Of course, the association between the PTRS port and the DMRS port is not limited to the aforementioned illustrative examples and may include other predefined associations, which are not restricted in the embodiment of the present disclosure.

Furthermore, it should be noted that the association between the PTRS port and the DMRS port in the aforementioned illustrative examples may include different combination forms. For example, the combination of (1) and (3), the combination of (1) and (4), the combination of (1), (4) and (5) and so on. The embodiment of the present disclosure is not limited here, and the specific association or the combination form of the association is determined based on the actual situation.

In addition, the association between the PTRS port and the DMRS port according to the embodiment of the present disclosure can be implemented in combination with steps S11 and S12 in FIG. 3 or steps S11, S12 and S14 in FIG. 4.

In the embodiment of the present disclosure, when the PTRS port for the terminal actually transmitting PTRS reference signals is 1, the terminal can determine the DMRS port actually associated with the PTRS port based on the association between the PTRS port and the DMRS port, thereby improving the estimation accuracy of phase noise sources under multi-antenna panels.

In a reference signal transmission method provided by an embodiment of the present disclosure, it is determined that the terminal actually transmits the PTRS reference signals via multiple PTRS ports, that is, M is greater than 1, and an association between the PTRS ports and the DMRS ports is determined.

In some embodiments, the association between the PTRS ports and the DMRS ports includes at least one of the following:
(a) each of the M PTRS ports is associated with a DMRS port having a smallest DMRS port index in a DMRS port group sharing the each PTRS port;
(b) dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
(c) each of the M PTRS ports is associated with a DMRS port corresponding to any fixed DMRS port index in a DMRS port group sharing the each PTRS port.

Taking the scenario where the terminal actually sends a PTRS reference signals via 2 PTRS ports as an example, the aforementioned association between the PTRS ports and the DMRS ports is illustrated through exemplary implementations.

For the above approach (a), for example, DMRS group 1 corresponding to PTRS port 1 includes: DMRSO and DMRS1. DMRS group 2 corresponding to PTRS port 2 includes: DMRSO and DMRS1. In this case, PTRS Port 1 and PTRS Port 2 are respectively associated with DMRSO in their respective DMRS groups.

For the above approach (b), for example, DMRS group 1 corresponding to PTRS port 1 includes: DMRSO and DMRS1. DMRS group 2 corresponding to PTRS port 2 includes: DMRSO and DMRS1. In this case, PTRS port 1 is associated with DMRSO in DMRS group 1, and PTRS port 2 is associated with DMRS1 in DMRS group 2.

For the above approach (c), for example, DMRS group 1 corresponding to PTRS port 1 includes: DMRSO and DMRS1. DMRS group 2 corresponding to PTRS port 2 includes: DMRSO and DMRS1. In this case, both PTRS Port 1 and PTRS Port 2 are associated with either DMRSO or DMRS1 in their respective DMRS groups.

In some embodiments, the association between the PTRS ports and the DMRS ports may further include that each of the M PTRS ports is associated with a DMRS port having a largest DMRS port index in a DMRS port group sharing the each PTRS port.

Of course, the association between the PTRS ports and the DMRS ports is not limited to the aforementioned illustrative examples and may include other predefined associations, which are not restricted in the embodiment of the present disclosure.

Furthermore, it should be noted that the association between the PTRS ports and the DMRS ports in the aforementioned illustrative examples may include different combination forms. For example, the combination of the (a) and (b), the combination of (a) and (c) and so on. The embodiment of the present disclosure is not limited here, and the specific association or the combination form of the association is determined based on the actual situation.

In addition, the association between the PTRS ports and the DMRS ports according to the embodiment of the present disclosure can be implemented in combination with steps S11 and S12 in FIG. 3 or steps S11, S12 and S14 in FIG. 4.

In the embodiment of the present disclosure, when the PTRS ports for the terminal actually transmitting PTRS reference signals is greater than 1, the terminal can determine the DMRS ports actually associated with the PTRS ports based on the association between the PTRS ports and the DMRS ports, thereby improving the estimation accuracy of phase noise sources under multi-antenna panels.

An embodiment of the present disclosure further provides a PTRS port determination method, as shown in FIG. 5, including the following steps.

At step S21, it is determined that the transmission mode adopted by the terminal for uplink transmission includes a codebook-based PUSCH transmission.

At step S22, TPMI information is received.

In some examples, the TPMI information may be carried in DCI signaling.

In some examples, TPMI is used to indicate M PTRS ports. For example, the TPMI is carried in DCI signaling, and the terminal receives DCI signaling and receives TPMI information based on DCI signaling.

At step S23, the M PTRS ports are determined based on one or more antenna port groups corresponding to actual transmission layers indicated by the TPMI information.

In some embodiments, the terminal determines the M PTRS ports based on one or more of the maximum number of PTRS ports, the number of antenna port groups, and the TPMI information.

In an exemplary embodiment, the maximum number of PTRS ports is 2 or 4, and the antenna port groups corresponding to the actual transmission layers indicated by the TPMI correspond to the same antenna port group, then M=1.

In an exemplary embodiment, the maximum number of PTRS ports is 2 or 4, the number of antenna port groups is 2, and the antenna port groups corresponding to the actual transmission layers indicated by the TPMI are different, then M=2.

In an exemplary embodiment, the maximum number of PTRS ports is 2 or 4, the number of antenna port groups is 4, and the antenna port groups corresponding to the actual transmission layers indicated by the TPMI are different, then M=2.

In an exemplary embodiment, the maximum number of PTRS ports is 4, the antenna port groups are divided into 4 groups, and the antenna port group corresponding to the actual transmission layer indicated by the TPMI is a single antenna port group, then M=1.

In an exemplary embodiment, the maximum number of PTRS ports is 4, the antenna port groups are divided into 4 groups, and the antenna port groups corresponding to the actual transmission layers indicated by the TPMI are three different antenna port groups, then M=3.

In an exemplary embodiment, the maximum number of PTRS ports is 4, the antenna port groups are divided into 4 groups, and the antenna port groups corresponding to the actual transmission layers indicated by the TPMI are four different antenna port groups, then M=4.

In the embodiment of the present disclosure, under the codebook-based PUSCH transmission, by receiving the TPMI information and determining M PTRS ports based on the antenna port groups corresponding to the actual transmission layers indicated by the TPMI information, the PTRS ports for the terminal actually transmitting the PTRS reference information can be determined.

It should be noted that the embodiment shown in FIG. 5 can be implemented independently, that is, when the embodiment shown in FIG. 5 is implemented independently, the terminal can determine that the transmission mode used for uplink transmission is codebook-based PUSCH transmission, receive TPMI information, and determine M PTRS ports according to the antenna port group(s) corresponding to the actual transmission layer(s) indicated by the TPMI information. However, the embodiment of the present disclosure does not limit the way to determine the association between M PTRS ports and DMRS ports. The embodiment shown in FIG. 5 can also be implemented together with other embodiments of the present disclosure, such as the embodiment shown in FIG. 3, i.e., determining that the maximum number of antenna groups for the terminal is 4 and the maximum number of PTRS ports is N, determining that the DCI does not include a PTRS-DMRS association indication field and the TRI indicated by the DCI is greater than 1, determining that the transmission mode adopted by the terminal for uplink transmission includes codebook-based PUSCH transmission, receiving TPMI information, determining M PTRS ports based on the antenna port group(s) corresponding to the actual transmission layer(s) indicated by TPMI information, and determining the association between M PTRS ports for the terminal actually transmitting PTRS reference signals and DMRS ports. Furthermore, the embodiment illustrated in FIG. 5 can also be implemented in combination with other embodiments of the present disclosure, such as the embodiment illustrated in FIG. 4.

An embodiment of the present disclosure further provides a PTRS port determination method, as shown in FIG. 6, including the following steps.

At step S31, the transmission mode adopted by the terminal for uplink transmission is a non-codebook-based PUSCH transmission.

At step S32, SRI information is received.

The SRI information may be carried in DCI signaling.

In some examples, SRI is used to indicate M PTRS ports. For example, the SRI is carried in DCI signaling, and the terminal receives DCI signaling and receives SRI information based on DCI signaling.

At step S33, the M PTRS ports and DMRS port groups respectively corresponding to the M PTRS ports are determined based on PTRS port indexes respectively corresponding to SRS resources indicated by the SRI information.

In some embodiments, the terminal determines the M PTRS ports based on one or more of the maximum number of PTRS ports, the number of antenna port groups, and the SRI information.

In an exemplary embodiment, the maximum number of PTRS ports is 2 or 4, and the SRS resource indicated by the SRI information corresponds to one PTRS port index, then M=1.

In an exemplary embodiment, the maximum number of PTRS ports is 2 or 4, the number of antenna port groups is 2 groups, and the SRS resources indicated by the SRI information correspond to different PTRS port indexes, then M=2.

In an exemplary embodiment, the maximum number of PTRS ports is 2 or 4, the number of antenna port groups is 4 groups, and the SRS resources indicated by the SRI information correspond to different PTRS port indices, then M=2.

In an exemplary embodiment, the maximum number of PTRS ports is 4, the antenna port groups are divided into 4 groups, and the SRS resource indicated by the SRI information corresponds to one PTRS port index, then M=1.

In an exemplary embodiment, the maximum number of PTRS ports is 4, the antenna port groups are divided into 4 groups, and the SRS resources indicated by the SRI information correspond to three PTRS port indexes, then M=3.

In an exemplary embodiment, the maximum number of PTRS ports is 4, the antenna port groups are divided into 4 groups, and the SRS resources indicated by the SRI information correspond to four PTRS port indexes, then M=4.

In some embodiments, the PTRS port index is used to indicate the SRS resources sharing the same PTRS port and the corresponding DMRS port, so the terminal can determine the DMRS port groups corresponding to the PTRS ports respectively based on the SRI information.

In the embodiment of the present disclosure, under the non-codebook-based PUSCH transmission, by receiving the SRI information, the M PTRS ports and the DMRS port groups corresponding to the M PTRS ports are determined based on the PTRS port indexes corresponding to the SRS resources of the sounding reference signal indicated by the SRI information, so that the PTRS ports for the terminal actually transmitting the PTRS reference information and the DMRS port groups respectively corresponding to the PTRS ports can be determined.

It should be noted that the embodiment shown in FIG. 6 can be implemented independently, that is, when the embodiment shown in FIG. 6 is implemented independently, the terminal can determine that the transmission mode used for uplink transmission is non-codebook-based PUSCH transmission, receive SRI information, and determine M PTRS ports and DMRS port groups respectively corresponding to the M PTRS ports based on PTRS port indexes respectively corresponding to SRS resources indicated by the SRI information. However, the embodiment of the present disclosure does not limit the way to determine the association between M PTRS ports and DMRS ports. The embodiment shown in FIG. 6 can also be implemented together with other embodiments of the present disclosure, such as the embodiment shown in FIG. 3, i.e., determining that the maximum number of antenna groups for the terminal is 4 and the maximum number of PTRS ports is N, determining that the DCI does not include a PTRS-DMRS association indication field and the TRI indicated by the DCI is greater than 1, determining that the transmission mode adopted by the terminal for uplink transmission includes non-codebook-based PUSCH transmission, receiving SRI information, determining M PTRS ports and DMRS port groups respectively corresponding to the M PTRS ports based on PTRS port indexes respectively corresponding to SRS resources indicated by the SRI information, and determining the association between M PTRS ports for the terminal actually transmitting PTRS reference signals and DMRS ports. Furthermore, the embodiment illustrated in FIG. 6 can also be implemented in combination with other embodiments of the present disclosure, such as the embodiment illustrated in FIG. 4.

Based on the same concept, embodiments of the present disclosure further provide a reference signal transmission method performed by a network device.

FIG. 7 is a flowchart of a reference signal transmission method according to an exemplary embodiment. As shown in FIG. 7, the reference signal transmission method is performed by a network device and includes the following steps.

At step S41, it is determined that a maximum number of phase tracking reference signal (PTRS) ports is N, and a number of PTRS ports for a terminal actually transmitting PTRS reference signals is M.

N is a positive integer, and M is a positive integer less than or equal to the N.

In some embodiments, the network device determines the maximum number of PTRS ports based on at least one of the following methods: terminal capability or protocol specifications.

For example, the network device determines the maximum number of PTRS ports supported by the terminal based on capability information reported by the terminal. For another example, the terminal determines the maximum number of PTRS ports based on the protocol specifications.

In a possible implementation, the network device receives capability information and determines, based on the capability information, that the maximum number of PTRS ports supported by the terminal is N.

In a possible implementation, the network device determines that the maximum number of PTRS ports is N and sends configuration information so that the terminal determines the maximum number of PTRS ports based on the configuration information.

In a possible implementation, the network device receives the capability information, configures the maximum number of PTRS ports for the terminal based on the capability information, and sends the configuration information, and the terminal determines the maximum number of PTRS ports based on the configuration information.

It is worth noting that the maximum number of PTRS ports supported by the terminal and the maximum number of PTRS ports configured by the network device can be the same or different.

At step S42, DCI is sent, the DCI does not include a PTRS-DMRS association indication field and a TRI indicated by the DCI is greater than 1.

In some embodiments, whether the DCI includes a PTRS-DMRS association indication field is determined based on a configuration of a first signaling. For example, the first signaling may be a radio resource control (RRC) signaling. For another example, the first signaling is mainly used to configure whether the DCI includes a PTRS-DMRS association indication field, which may be, for example, RRC signaling, but may also be other signaling, which is not limited in the embodiments of the present disclosure.

In some embodiments, the TRI is carried in the DCI. In other embodiments, the TRI is used to indicate the number of transmission layers, and TRI can also be carried in other signaling.

In a special case, when the TRI is 1, there is no need to determine the association between PTRS ports and DMRS ports, and a PTRS port for the terminal actually transmitting PTRS reference signals is associated with a DMRS port by default.

At step S43, an association between M PTRS ports and DMRS ports is determined based on the DMRS ports respectively corresponding to the M PTRS ports.

The M PTRS ports are the ports via which the terminal actually transmits the PTRS reference signals, and N PTRS ports are the maximum number of PTRS ports. Therefore, the number of M PTRS ports, which correspond to the PTRS reference signal actually sent by the terminal, is less than or equal to N, and M is a positive integer. In some embodiments, the network device determines the M PTRS ports based on a transmission mode adopted by the terminal for uplink transmission.

In some examples, the transmission mode adopted by the terminal for uplink transmission includes a codebook-based PUSCH transmission or a non-codebook-based PUSCH transmission.

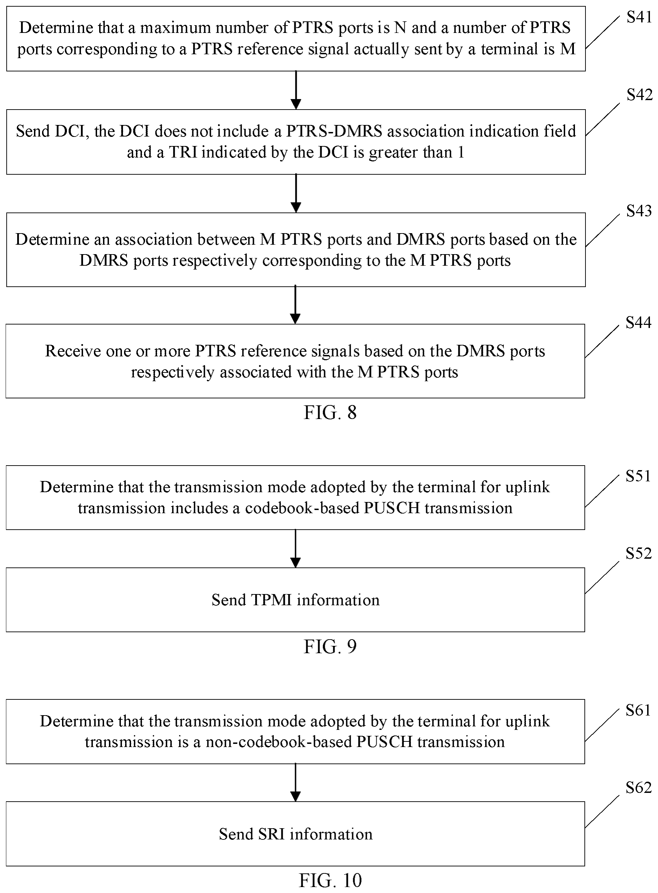

In some embodiments, the network device determines that the transmission mode adopted by the terminal for uplink transmission is the codebook-based PUSCH transmission, and the network device can indicate the M PTRS ports based on TPMI information. For example, the M PTRS ports may be indicated based on one or more antenna port groups corresponding to actual transmission layers indicated by the TPMI information. For details, please refer to the embodiment shown in FIG. 9, which will not be described in detail in the embodiments of the present disclosure.

In some embodiments, the network device determines that the transmission mode adopted by the terminal for uplink transmission is the non-codebook-based PUSCH transmission, and the network device can indicate the M PTRS ports based on SRI information. For example, the M PTRS ports may be indicated based on PTRS port indexes respectively corresponding to sounding reference signal (SRS) resources indicated by the SRI information. For details, please refer to the embodiment shown in FIG. 10, which will not be described in detail in the embodiments of the present disclosure.

In some embodiments, the type of PUSCH corresponding to the uplink transmission of the terminal includes at least one of: scheduling-based PUSCH; grant-free PUSCH type 1; or grant-free PUSCH type 2.

In some embodiments, the network device determines the association between the M PTRS ports and the DMRS ports based on a default rule. In some embodiments, the default rule includes the number of codewords. For example, the network device instructs the terminal to actually transmit the PTRS reference signals via a single PTRS port, that is, M is 1. The network device can determine the association between the single PTRS port and a DMRS port based on the number of codewords transmitted by the terminal.

In an implementation, the terminal in the embodiments of the present disclosure is equipped with 8 antennas, supports up to 8-layer transmission in the uplink, and supports a maximum of 2 codewords. In an implementation, the terminal transmits one codeword CWO corresponding to 1-4 layers, and transmits to two codewords CW0 and CW1 corresponds to 5-8 layers.

For example, the number of codewords transmitted by the terminal is 1, and the network device determines that the single PTRS port is associated with a DMRS port having a smallest DMRS port index among all of the DMRS ports. For another example, the number of codewords transmitted by the terminal is 2, the network device can determine the association between the single PTRS port and the DMRS port based on MCS level of codewords. For example, the number of codewords transmitted by the terminal is 2, and the network device determines that the single PTRS port is associated with a DMRS port having a smallest DMRS port index in a DMRS port group that shares the PTRS port and corresponds to a codeword with a higher MCS level. Of course, the association between the single PTRS port and the DMRS port is not limited to the aforementioned illustrative descriptions. Specific examples of the association between the single PTRS port and the DMRS port are provided below and will not be described in detail in the embodiment of the present disclosure.

In some examples, the number of codewords transmitted by the terminal indicates the number of codewords corresponding to PUSCH transmission by the terminal. Of course, in some embodiments, the number of codewords transmitted by the terminal can also indicate the number of codewords corresponding to transmission of other channels by the terminal. Here, the number of codewords transmitted by the terminal is explained in a unified way, which will not be described in detail below.

In some embodiments, the network device instructs the terminal to actually transmit the PTRS reference signals via to multiple PTRS ports, that is, M is greater than 1. The network device can determine the association between the M PTRS ports and the DMRS ports based on a default rule. For example, the default rule may be that each of the M PTRS ports is associated with a DMRS port having a smallest DMRS port index in a DMRS port group sharing the each PTRS port. For another example, the default rule may be that each of the M PTRS ports is associated with a DMRS port corresponding to any fixed DMRS port index in a DMRS port group sharing the each PTRS port. Of course, the association between the M PTRS ports and the DMRS ports is not limited to the aforementioned illustrative descriptions. Specific examples of the association between the M PTRS ports and the DMRS ports are provided below and will not be described in detail in the embodiment of the present disclosure.

In the embodiment of the present disclosure, the network device determines the maximum number of PTRS ports is N and the number of PTRS ports for a terminal actually transmitting PTRS reference signals is M, sends DCI, where the DCI does not include a PTRS-DMRS association indication field, and the TRI indicated by the DCI is greater than 1, and determines the association between M PTRS ports and DMRS ports based on the DMRS port corresponding to each of the M PTRS ports. This enables the terminal to determine the association between M PTRS ports and DMRS ports even when the DCI does not include a PTRS-DMRS association indication field, thereby improving the estimation accuracy of the phase noise source under the multi-antenna panel.

In the embodiments of the present disclosure, there is no strict execution order for step S41 and step S42. In some embodiments, the determination of the maximum number of PTRS ports in step S41 may be performed first, and then the sending of DCI in step S42 may be performed, and then the determination of the number of PTRS ports corresponding to the PTRS reference signal actually sent by the terminal in step S41 may be performed. In other embodiments, step S42 may be performed first and then step S41. The embodiments of the present disclosure are only for exemplary description, and the execution order of step S41 and step S42 is not limited.

An embodiment of the present disclosure further provides a flowchart of a reference signal transmission method, as shown in FIG. 8, including the following steps.

At step S41, it is determined that a maximum number of phase tracking reference signal (PTRS) ports is N and a number of PTRS ports for a terminal actually transmitting PTRS reference signals is M.

At step S42, DCI is sent, the DCI does not include a PTRS-DMRS association indication field and a TRI indicated by the DCI is greater than 1.

At step S43, an association between M PTRS ports and DMRS ports is determined based on the DMRS ports respectively corresponding to the M PTRS ports.

The specific implementation of step S41, step S42 and step S43 can refer to the specific implementation of step S41, step S42 and step S43 in FIG. 7, and the embodiment of the present disclosure will not be repeated here.

At step S44, one or more PTRS reference signals are received based on the DMRS ports respectively associated with the M PTRS ports.

In the embodiment of the present disclosure, the network device can receive one or more PTRS reference signals based on the DMRS ports respectively associated with the M PTRS ports, thereby improving the estimation accuracy of the phase noise source under the multi-antenna panel.

In the embodiments of the present disclosure, there is no strict execution order for step S41 and step S42. In some embodiments, the determination of the maximum number of PTRS ports in step S41 may be performed first, and then the sending of DCI in step S42 may be performed, and then the determination of the number of PTRS ports corresponding to the PTRS reference signal actually sent by the terminal in step S41 may be performed. In other embodiments, step S42 may be performed first and then step S41. The embodiments of the present disclosure are only for exemplary description, and the execution order of step S41 and step S42 is not limited.

The association between the M PTRS ports and the DMRS ports is detailed below.

In a reference signal transmission method provided by an embodiment of the present disclosure, it is determined that the terminal actually transmits the PTRS reference signals via a single PTRS port, that is, M is 1, and an association between a PTRS port and a DMRS port can be determined based on the number of codewords transmitted by the terminal.

In some embodiments, the association between the PTRS port and the DMRS port includes at least one of the following:
(1) a number of codewords transmitted by the terminal is 1, and a PTRS port is associated with a DMRS port having a smallest DMRS port index among all of the DMRS ports;
(2) a number of codewords transmitted by the terminal is 1, and a PTRS port is associated with a DMRS port having a smallest DMRS port index in a DMRS port group sharing the PTRS port;
(3) a number of codewords transmitted by the terminal is 2, and a PTRS port is associated with a DMRS port having a smallest DMRS port index in a DMRS port group that shares the PTRS port and corresponds to a codeword with a higher modulation and coding style (MCS) level;
(4) a number of codewords transmitted by the terminal is 2 and MCS levels of different codewords are identical, and a PTRS port is associated with a DMRS port having a smallest DMRS port index in a DMRS port group corresponding to a first codeword CW0; or
(5) a number of codewords transmitted by the terminal is 1 or 2, and a PTRS port is associated with a DMRS port corresponding to any DMRS index in a DMRS port group sharing the PTRS port.

In an implementation, for the above association (1), the antenna group is 1, and the transmission between each antenna is fully coherent. For example, the PTRS port is associated with a DMRS port having a DMRS port index of "0".

In an implementation, for the above association (2), the antennas are grouped into 2 or 4, and the transmission between each antenna is partially coherent. For example, when the antennas are grouped into 2, each group includes 4 antennas, and a PTRS port is associated with a DMRS port having a DMRS port index of "0" in a DMRS port group that shares the PTRS port.

In some embodiments, the association between the PTRS port and the DMRS port includes at least one of the following:
(6) a number of codewords transmitted by the terminal is 1, and a PTRS port is associated with a DMRS port having a largest DMRS port index among all of the DMRS ports;
(7) a number of codewords transmitted by the terminal is 1, and a PTRS port is associated with a DMRS port having a largest DMRS port index in a DMRS port group sharing the PTRS port; or
(8) a number of codewords transmitted by the terminal is 2, and a PTRS port is associated with a DMRS port having a largest DMRS port index in a DMRS port group that shares the PTRS port and corresponds to a codeword with a higher MCS level.

In some embodiments, the association between the PTRS port and the DMRS port may further include: PTRS port cycling, that is, the PTRS port corresponding to each transmission of the PTRS reference signal is corresponding to different DMRS ports based on the order of DMRS port indexes.

Of course, the association between the PTRS port and the DMRS port is not limited to the aforementioned illustrative examples and may include other predefined associations, which are not restricted in the embodiment of the present disclosure.

Furthermore, it should be noted that the association between the PTRS port and the DMRS port in the aforementioned illustrative examples may include different combination forms. For example, the combination of (1) and (3), the combination of (1) and (4), the combination of (1), (4) and (5) and so on. The embodiment of the present disclosure is not limited here, and the specific association or the combination form of the association is determined based on the actual situation.

In addition, the association between the PTRS port and the DMRS port according to the embodiment of the present disclosure can be implemented in combination with steps S41 and S42 in FIG. 7 or steps S41, S42 and S44 in FIG. 8.

In the embodiment of the present disclosure, when the network device configures that the PTRS port corresponding to the PTRS reference signal actually sent by the terminal is 1, the network device configures the association between the PTRS port and the DMRS port based on the DMRS port corresponding to the PTRS port. This enables the terminal to determine the DMRS port actually associated with the PTRS port, thereby improving the estimation accuracy of phase noise sources under multi-antenna panels.

In a reference signal transmission method provided by an embodiment of the present disclosure, it is determined that the terminal actually transmits the PTRS reference signals multiple PTRS ports, that is, M is greater than 1, and an association between the PTRS ports and the DMRS ports is determined.

In some embodiments, the association between the PTRS ports and the DMRS ports includes at least one of the following:
(a) each of the M PTRS ports is associated with a DMRS port having a smallest DMRS port index in a DMRS port group sharing the each PTRS port;
(b) dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
(c) each of the M PTRS ports is associated with a DMRS port corresponding to any fixed DMRS port index in a DMRS port group sharing the each PTRS port.

Taking the scenario where the terminal actually sends PTRS reference signals via 2 PTRS ports as an example, the aforementioned association between the PTRS ports and the DMRS ports is illustrated through exemplary implementations.

For the above approach (a), for example, DMRS group 1 corresponding to PTRS port 1 includes: DMRSO and DMRS1. DMRS group 2 corresponding to PTRS port 2 includes: DMRSO and DMRS1. In this case, PTRS Port 1 and PTRS Port 2 are respectively associated with DMRSO in their respective DMRS groups.

For the above approach (b), for example, DMRS group 1 corresponding to PTRS port 1 includes: DMRSO and DMRS1. DMRS group 2 corresponding to PTRS port 2 includes: DMRSO and DMRS1. In this case, PTRS port 1 is associated with DMRSO in DMRS group 1, and PTRS port 2 is associated with DMRS1 in DMRS group 2.

For the above approach (c), for example, DMRS group 1 corresponding to PTRS port 1 includes: DMRSO and DMRS1. DMRS group 2 corresponding to PTRS port 2 includes: DMRSO and DMRS1. In this case, both PTRS Port 1 and PTRS Port 2 are associated with either DMRSO or DMRS1 in their respective DMRS groups.

In some embodiments, the association between the PTRS ports and the DMRS ports may further include that each of the M PTRS ports is associated with a DMRS port having a largest DMRS port index in a DMRS port group sharing the each PTRS port.

Of course, the association between the PTRS port and the DMRS port is not limited to the aforementioned illustrative examples and may include other predefined associations, which are not restricted in the embodiment of the present disclosure.

Furthermore, it should be noted that the association between the PTRS port and the DMRS port in the aforementioned illustrative examples may include different combination forms. For example, the combination of the (a) and (b), the combination of (a) and (c) and so on. The embodiment of the present disclosure is not limited here, and the specific association or the combination form of the association is determined based on the actual situation.

In addition, the association between the PTRS port and the DMRS port according to the embodiment of the present disclosure can be implemented in combination with steps S11 and S12 in FIG. 7 or steps S11, S12 and S14 in FIG. 8.

In the embodiment of the present disclosure, when the network device determines that the PTRS port corresponding to the PTRS reference signal actually sent by the terminal is greater than 1, the network device configures the association between the PTRS ports and the DMRS ports based on the DMRS ports corresponding to the PTRS ports. This enables the terminal to determine the DMRS port actually associated with the PTRS port, thereby improving the estimation accuracy of phase noise sources under multi-antenna panels.

An embodiment of the present disclosure further provides a PTRS port determination method, as shown in FIG. 9, including the following steps.

At step S51, it is determined that the transmission mode adopted by the terminal for uplink transmission includes a codebook-based PUSCH transmission.

At step S52, TPMI information is sent.

In some examples, the TPMI information may be carried in DCI signaling.

In some examples, TPMI is used to indicate M PTRS ports. For example, the TPMI is carried in the DCI signaling, and the network transmits the TPMI information through the DCI signaling.

In some embodiments, the network device configures the M PTRS ports for the terminal based on one or more of the maximum number of PTRS ports and the number of antenna port groups.

In an exemplary embodiment, when the maximum number of PTRS ports is 2 or 4, the network device can configure the antenna port groups corresponding to the actual transmission layers indicated by the TPMI to correspond to the same antenna port group, then M=1.

In an exemplary embodiment, when the maximum number of PTRS ports is 2 or 4 and the number of antenna port groups is 2, the network device can configure the antenna port groups corresponding to the actual transmission layers indicated by the TPMI to be different antenna port groups, then M=2.

In an exemplary embodiment, when the maximum number of PTRS ports is 2 or 4 and the number of antenna port groups is 4, the network device can configure the antenna port groups corresponding to the actual transmission layers indicated by the TPMI to be different antenna port groups, then M=2.

In an exemplary embodiment, when the maximum number of PTRS ports is 4 and the antenna port groups are divided into 4 groups, the network device can configure the antenna port group corresponding to the actual transmission layer indicated by the TPMI to be one antenna port group, then M=1.

In an exemplary embodiment, when the maximum number of PTRS ports is 4 and the antenna port groups are divided into 4 groups, the network device can configure the antenna port groups corresponding to the actual transmission layers indicated by the TPMI to be three different antenna port groups, then M=3.

In an exemplary embodiment, when the maximum number of PTRS ports is 4 and the antenna port groups are divided into 4 groups, the network device can configure the antenna port groups corresponding to the actual transmission layers indicated by the TPMI to be four different antenna port groups, then M=4.

In the embodiment of the present disclosure, under the codebook-based PUSCH transmission, the network device, by transmitting TPMI information, enables the terminal to determine the PTRS ports for the terminal actually transmitting the PTRS reference information based on the TPMI information.

It should be noted that the embodiment shown in FIG. 9 can be implemented independently, that is, when the embodiment shown in FIG. 9 is implemented independently, the network device determines that the transmission mode adopted by the terminal for uplink transmission is codebook-based PUSCH transmission, and sends TPMI information to indicate the terminal to determine M PTRS ports. However, the embodiment of the present disclosure does not limit how the network device configures the association between M PTRS ports and DMRS ports. The embodiment shown in FIG. 9 can also be implemented together with other embodiments of the present disclosure, such as the embodiment shown in FIG. 7, i.e., determining that the maximum number of PTRS ports is N, sending DCI, where the DCI does not include a PTRS-DMRS association indication field and the TRI indicated by the DCI is greater than 1, determining that the transmission mode adopted by the terminal for uplink transmission includes codebook-based PUSCH transmission, sending TPMI information to indicate the terminal to determine M PTRS ports, and configuring the association between the M PTRS ports and the DMRS ports. Furthermore, the embodiment illustrated in FIG. 9 can also be implemented in combination with other embodiments of the present disclosure, such as the embodiment illustrated in FIG. 8.

In a reference signal transmission method provided by an embodiment of the present disclosure, a method for determining a PTRS port is further provided, as shown in FIG. 10, including the following steps.

At step S61, it is determined that the transmission mode adopted by the terminal for uplink transmission is a non-codebook-based PUSCH transmission.

At step S62, SRI information is sent.

In some examples, the SRI information may be carried in DCI signaling.

In some examples, SRI is used to indicate M PTRS ports. For example, the SRI is carried in DCI signaling, and the network device sends the SRI information by sending the DCI signaling.

In some embodiments, the network device configures the SRI information based on the maximum number of PTRS ports and the number of antenna port groups.
In an exemplary embodiment, when the maximum number of PTRS ports is 2 or 4, the network device can configure the SRS resource indicated by the SRI information to correspond to one PTRS port index, then M=1.

In an exemplary embodiment, when the maximum number of PTRS ports is 2 or 4 and the number of antenna port groups is 2 groups, the network device can configure the SRS resources indicated by the SRI information to correspond to different PTRS port indexes, then M=2.

In an exemplary embodiment, when the maximum number of PTRS ports is 2 or 4 and the number of antenna port groups is 4 groups, the network device can configure the SRS resources indicated by the SRI information to correspond to different PTRS port indices, then M=2.

In an exemplary embodiment, when the maximum number of PTRS ports is 4 and the antenna port groups are divided into 4 groups, the network device can configure the SRS resource indicated by the SRI information to correspond to one PTRS port index, then M=1.

In an exemplary embodiment, when the maximum number of PTRS ports is 4 and the antenna port groups are divided into 4 groups, the network device can configure the SRS resources indicated by the SRI information to correspond to three PTRS port indexes, then M=3.

In an exemplary embodiment, when the maximum number of PTRS ports is 4 and the antenna port groups are divided into 4 groups, the network device can configure the SRS resources indicated by the SRI information to correspond to four PTRS port indexes, then M=4.

In some embodiments, the PTRS port index is used to indicate the SRS resources sharing the same PTRS port and the corresponding DMRS port. Therefore, the SRI information can further be used to indicate the DMRS port groups corresponding to the PTRS ports respectively.

In the embodiment of the present disclosure, when it is determined that the terminal performs non-codebook-based PUSCH transmission, by sending SRI information, the terminal can determine the PTRS ports corresponding to the PTRS reference signal actually transmitted by the terminal and the DMRS port groups respectively corresponding to the PTRS ports.

It should be noted that the embodiment shown in FIG. 10 can be implemented independently, that is, when the embodiment shown in FIG. 10 is implemented independently, the terminal can determine that the transmission mode used for uplink transmission is non-codebook-based PUSCH transmission, receive SRI information, and determine M PTRS ports and DMRS port groups respectively corresponding to the M PTRS ports based on PTRS port indexes respectively corresponding to SRS resources indicated by the SRI information. However, the embodiment of the present disclosure does not limit the way to determine the association between M PTRS ports and DMRS ports. The embodiment shown in FIG. 7 can also be implemented together with other embodiments of the present disclosure, such as the embodiment shown in FIG. 7, i.e., determining that the maximum number of antenna groups for the terminal is 4 and the maximum number of PTRS ports is N, determining that the DCI does not include a PTRS-DMRS association indication field and the TRI indicated by the DCI is greater than 1, determining that the transmission mode adopted by the terminal for uplink transmission includes non-codebook-based PUSCH transmission, receiving SRI information, determining M PTRS ports and DMRS port groups respectively corresponding to the M PTRS ports based on PTRS port indexes respectively corresponding to SRS resources indicated by the SRI information, and determining the association between M PTRS ports for the terminal actually transmitting PTRS reference signals and DMRS ports. Furthermore, the embodiment illustrated in FIG. 10 can also be implemented in combination with other embodiments of the present disclosure, such as the embodiment illustrated in FIG. 8.

An embodiment of the present disclosure further provides a reference signal transmission method, as described below.

The terminal reports through capability information that the maximum number of ports supporting Phase Tracking Reference Signal (PTRS) is 4.

In some embodiments, the network device configures a transmission of PTRS and configures the maximum number of PTRS ports to 4 based on the capability information reported by the terminal, and the maximum number of antenna groups (Ng) is 4. If an PTRS-DMRS association indication field in Downlink Control Information (DCI) is not configured, a default transmission mode of the Physical Uplink Shared Channel (PUSCH) PTRS and a PTRS definition of a scheduling-free PUSCH type 1 are sent according to one of the following default modes.

In some embodiments, when the network device configures the transmission of PTRS and configures the maximum number of PTRS ports is 1, the Transmission Layer Indication (TRI) is greater than 1 at the same time.

In an implementation, the terminal transmits 1 Codeword (CW) by default on a DMRS port with a smallest index among all Demodulation Reference Signal (DMRS) ports, i.e., a DMRS port with an index of 0 (corresponding to the number of antenna groups (Ng) = 1, i.e., a fully coherent case).

In an implementation, the terminal transmits 1 CW by default on a DMRS port with a smallest index in a DMRS port group sharing a phase tracking reference signal (PTRS port), i.e., a DMRS port with an index of 0 (corresponding to Ng=2 or 4, i.e., a partially coherent case).

In an implementation, the terminal transmits 2 CWs by default on a DMRS port with a smallest index in a DMRS port group corresponding to a CW with a higher Modulation and Coding Style (MCS) level, i.e., a DMRS port with an index of 0.

In an implementation, the terminal transmits 2 CWs, and if the MCS levels corresponding to the two CWs are the same, it defaults to transmitting on a DMRS port with a smallest index corresponding to CW0, i.e., a DMRS port with an index of 0.

In an implementation, the Phase Tracking Reference Signal (PTRS) cycling.

In an implementation, other predefined methods, such as transmission on any fixed DMRS port (non-zero port).

In some embodiments, when the network device configures the transmission of PTRS and the actual number of PTRS ports is 2, the Transmission Layer Indication (TRI) is greater than 1 at the same time.

In an implementation, a DMRS port with a smallest index is selected for transmission in both DMRS port groups by default.

In an implementation, PTRS cycling is implemented separately in the two DMRS port groups.

In an implementation, other predefined methods, such as transmission on any fixed DMRS port.

In some embodiments, when the network device configures the transmission of PTRS and the maximum number of PTRS ports is 4, the Transmission Layer Indication (TRI) is greater than 1 at the same time.

In an implementation, a DMRS port with a smallest index is selected for transmission in 1, 2, 3, or 4 DMRS port groups by default.

For Codebook-Based (CB) transmission, it is determined by a Transmission Precoding Matrix Indicator (TPMI).

For Non-Codebook-Based (NCB) transmission, the actual number of transmitted PTRS ports and their corresponding different DMRS groups are determined by the number of Phase Tracking Reference Signal indexes (ptrsPortIndex) (0-3) corresponding to a Sounding Reference Signal (SRS) resource combination indicated by a Sounding Reference Signal Resource Indicator (SRI).

In an implementation, PTRS cycling is implemented separately among DMRS port indexes in different DMRS groups in 1, 2, 3, or 4 DMRS groups.

In an implementation, transmission on any fixed DMRS port (non-zero port).

In the embodiment of the present disclosure, the problem of the default transmission mode for actually sending PTRS reference signals when supporting up to 4 PTRS ports and when PTRS transmission has no indication of the relationship between PT-RS and DMRS is solved, and it is also applicable to Grant-Free Type 1 PTRS transmission.

It should be noted that those skilled in the art can understand that the above-mentioned various implementations/examples of the embodiments of the present disclosure can be used together with the aforementioned embodiments or independently. Whether used alone or in combination with the aforementioned embodiments, the implementation principle is similar. In the implementation of the present disclosure, some embodiments are explained in a way of using them together. Of course, those skilled in the art can understand that such examples are not limiting the embodiments of the present disclosure.

Based on the same concept, an embodiment of the present disclosure further provides a reference signal transmission apparatus.

It can be understood that, in order to realize the above functions, the reference signal transmission apparatus provided by the embodiments of the present disclosure includes corresponding hardware structures and/or software modules for performing various functions. Combining the units and algorithm steps of various examples disclosed in the embodiments of the present disclosure, the embodiments of the present disclosure can be realized in the form of hardware or a combination of hardware and computer software. Whether a function is executed by hardware or computer software drives hardware depends on the specific application and design constraints of the technical solution. Those skilled in the art can use different methods to realize the described functions for each specific application, but this realization should not be considered beyond the scope of the technical solution of the embodiments of the present disclosure.

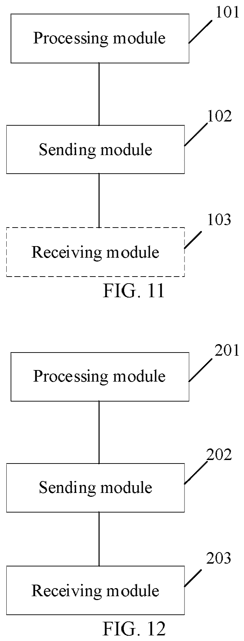

FIG. 11 is a schematic diagram of a first reference signal transmission apparatus according to an exemplary embodiment. Referring to FIG. 11, the apparatus includes a processing module 101 and a sending module 102.

The processing module 101 is configured to determine that a maximum number of antenna groups for the terminal is 4 and a maximum number of phase tracking reference signal (PTRS) ports is N, where N is a positive integer.

The processing module 101 is further configured to determine that downlink control information (DCI) does not include a PTRS-demodulation reference signal (DMRS) association indication field and a transmission rank indication (TRI) indicated by the DCI is greater than 1.

The processing module 101 is further configured to determine an association between M PTRS ports and DMRS ports, where the M PTRS ports are for the terminal actually transmitting PTRS reference signals, and M is a positive integer less than or equal to the N.

The sending module 102 is configured to send one or more PTRS reference signals based on the DMRS ports respectively associated with the M PTRS ports.

In an implementation, the N is determined to be 4 and the M is determined to be 1, and the association between the M PTRS ports and the DMRS ports includes at least one of:
a number of codewords transmitted by the terminal is 1, and a PTRS port is associated with a DMRS port having a smallest DMRS port index among all of the DMRS ports;
a number of codewords transmitted by the terminal is 1, and a PTRS port is associated with a DMRS port having a smallest DMRS port index in a DMRS port group sharing the PTRS port;
a number of codewords transmitted by the terminal is 2, and a PTRS port is associated with a DMRS port having a smallest DMRS port index in a DMRS port group that shares the PTRS port and corresponds to a codeword with a higher modulation and coding style (MCS) level;
a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

In an implementation, the N is determined to be 4 and the M is greater than 1, and the association between the M PTRS ports and the DMRS ports includes at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

In an implementation, the M PTRS ports for the terminal actually transmitting PTRS reference signals are determined according to a transmission mode adopted by the terminal for uplink transmission, and the transmission mode adopted by the terminal for uplink transmission includes a codebook-based physical uplink shared channel (PUSCH) transmission or a non-codebook-based PUSCH transmission.

In an implementation, the transmission mode adopted by the terminal for uplink transmission includes a codebook-based PUSCH transmission.

The apparatus further includes a receiving module 103. The receiving module 103 is configured to receive transmission precoding matrix indicator (TPMI) information.

The processing module 101 is further configured to determine the M PTRS ports based on one or more antenna port groups corresponding to actual transmission layers indicated by the TPMI information.

In an implementation, the transmission mode adopted by the terminal for uplink transmission includes a non-codebook-based PUSCH transmission.

The receiving module 103 is further configured to receive sounding reference signal resource indicator (SRI) information.

The processing module 101 is further configured to determine the M PTRS ports and DMRS port groups respectively corresponding to the M PTRS ports based on PTRS port indexes respectively corresponding to sounding reference signal (SRS) resources indicated by the SRI information.

In an implementation, the sending module 102 is further configured to send capability information, where the capability information indicates that a maximum number of PTRS ports supported by the terminal is the N.

In an implementation, the receiving module 103 is further configured to receive configuration information, where the configuration information is used for configuring the maximum number of PTRS ports for the terminal.

In an implementation, a PUSCH type corresponding to an uplink transmission of the terminal includes at least one of:
scheduling-based PUSCH;
grant-free PUSCH type 1; or
grant-free PUSCH type 2.

Regarding to the apparatus in the above embodiment, a specific way in which each module performs operations has been described in detail in the embodiments relating to the method, and will not be described in detail here.

FIG. 12 is a block diagram of a second reference signal transmission apparatus according to an exemplary embodiment. Referring to FIG. 12, the apparatus includes a processing module 201, a sending module 202 and a receiving module 203.

The processing module 201 is configured to determine that a maximum number of phase tracking reference signal (PTRS) ports is N and a number of PTRS ports for a terminal actually transmitting PTRS reference signals is M, where N is a positive integer and M is a positive integer less than or equal to the N.

The sending module 202 is configured to send downlink control information (DCI), where the DCI does not include a PTRS-demodulation reference signal (DMRS) association indication field and a transmission rank indication (TRI) indicated by the DCI is greater than 1.

The processing module 201 is further configured to determine an association between M PTRS ports and DMRS ports based on the DMRS ports respectively corresponding to the M PTRS ports.

The receiving module 203 is configured to receive one or more PTRS reference signals based on the DMRS ports respectively associated with the M PTRS ports.

In an implementation, the N is determined to be 4 and the M is determined to be 1, and the association between the M PTRS ports and the DMRS ports includes at least one of:
determining that a number of codewords transmitted by the terminal is 1, and a PTRS port is associated with a DMRS port having a smallest DMRS port index among all of the DMRS ports;
determining that a number of codewords transmitted by the terminal is 1, and a PTRS port is associated with a DMRS port having a smallest DMRS port index in a DMRS port group sharing the PTRS port;
determining that a number of codewords transmitted by the terminal is 2, and a PTRS port is associated with a DMRS port having a smallest DMRS port index in a DMRS port group sharing the PTRS port corresponding to a codeword with a higher modulation and coding style (MCS) level;
determining that a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

In an implementation, the N is determined to be 4 and the M is greater than 1, and the association between the M PTRS ports and the DMRS ports includes at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, where different PTRS ports in the T groups of PTRS ports are associated with different DMRS ports in different DMRS port groups, where each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

In an implementation, the processing module 201 is further configured to determine that the transmission mode adopted by the terminal for uplink transmission is a codebook-based PUSCH transmission.

The sending module 202 is further configured to send transmission precoding matrix indicator (TPMI) information, where the TPMI information indicates the M PTRS ports.

In an implementation, the processing module 201 is further configured to determine that the transmission mode adopted by the terminal for uplink transmission is a non-codebook-based PUSCH transmission.

The sending module 202 is further configured to send sounding reference signal resource indicator (SRI) information, where the SRI information indicates the M PTRS ports and DMRS port groups respectively corresponding to the M PTRS ports.

In an implementation, the receiving module 203 is further configured to receive capability information, where the capability information indicates that a maximum number of PTRS ports supported by the terminal is the N.

In an implementation, the sending module 202 is further configured to send configuration information, where the configuration information is used for configuring the maximum number of PTRS ports.

In an implementation, a PUSCH type corresponding to an uplink transmission of the terminal includes at least one of:
scheduling-based PUSCH;
grant-free PUSCH type 1; or
grant-free PUSCH type 2.

Regarding to the apparatus in the above embodiment, a specific way in which each module performs operations has been described in detail in the embodiments relating to the method, and will not be described in detail here.

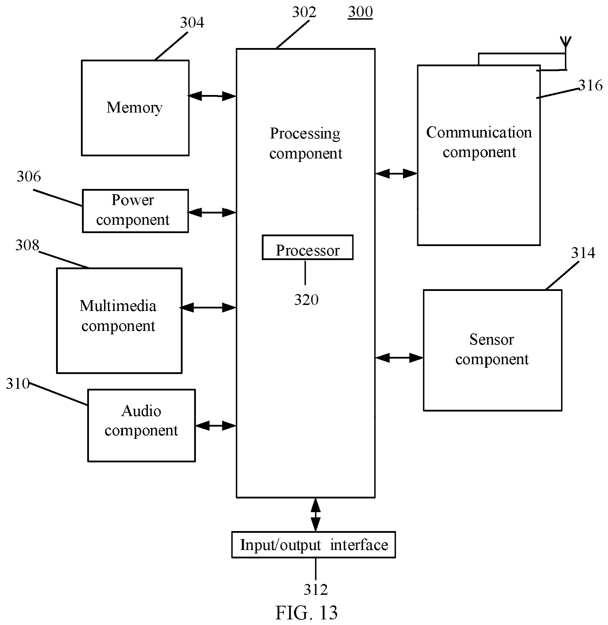

FIG. 13 is a schematic diagram of a first communication device according to an exemplary embodiment. For example, a device 300 may be a mobile phone, a computer, a digital broadcasting terminal, a messaging device, a game console, a tablet device, a medical device, a fitness device, a personal digital assistant, etc.

Referring to FIG. 13, the device 300 may include one or more of the following components: a processing component 302, a memory 304, a power component 306, a multimedia component 308, an audio component 310, an input/output (I/O) interface 312, a sensor component 314, and a communication component 316.

The processing component 302 generally controls an overall operation of the device 300, such as operations associated with display, telephone call, data communication, camera operation and recording operation. The processing component 302 may include one or more processors 320 to execute instructions to complete all or part of steps of the above-mentioned method. In addition, the processing component 302 may include one or more modules to facilitate interactions between the processing component 302 and other components. For example, the processing component 302 may include a multimedia module to facilitate interactions between the multimedia component 308 and the processing component 302.

The memory 304 is configured to store various types of data to support operations in the device 300. Examples of these data include instructions of any application program or method for being operated on the device 300, contact data, phone book data, messages, pictures, videos, etc. The memory 304 can be implemented by any type of volatile or non-volatile memory device or combinations thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 306 provides power to various components of the device 300. The power component 306 may include a power management system, one or more power supplies, and other components associated with generating, managing and distributing power for the device 300.

The multimedia component 308 includes a screen that provides an output interface between the device 300 and a user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touching, sliding and gestures on the touch panel. The touch sensor may not only sense a boundary of a touching or sliding action, but also detect a duration and a pressure related to the touching or sliding operation. In some embodiments, the multimedia component 308 includes a front camera and/or a rear camera. When the device 300 is in an operation mode, such as a shooting mode or a video mode, the front camera and/or the rear camera can receive external multimedia data. Each front camera and rear camera may be a fixed optical lens system or have focal length and optical zoom capability.

The audio component 310 is configured to output and/or input audio signals. For example, the audio component 310 includes a microphone (MIC) configured to receive external audio signals when the device 300 is in the operation mode, such as a calling mode, a recording mode and a voice recognition mode. The received audio signal may be further stored in the memory 304 or transmitted via the communication component 316. In some embodiments, the audio component 310 further includes a speaker for outputting audio signals.

The I/O interface 312 provides an interface between the processing component 302 and peripheral interface modules, where the peripheral interface modules may be keyboards, click-wheels, buttons, etc. These buttons may include, but are not limited to: home button, volume button, start button and lock button.

The sensor component 314 includes one or more sensors for providing various aspects of state evaluation for the device 300. For example, the sensor component 314 can detect an on/off state of the device 300, a relative positioning of components, for example, the components are the display and the keypad of the device 300, and the sensor component 314 can further detect a position change of the device 300 or a component of the device 300, presence or absence of user contact with the device 300, orientation or acceleration/deceleration of the device 300 and a temperature change of the device 300. The sensor component 314 may include a proximity sensor configured to detect presence of a nearby object without any physical contact. The sensor component 314 may also include an optical sensor, such as a CMOS or CCD image sensor, for use in imaging applications. In some embodiments, the sensor component 314 may further include an acceleration sensor, a gyroscope sensor, a magnetic sensor, a pressure sensor or a temperature sensor.

The communication component 316 is configured to facilitate wired or wireless communication between the device 300 and other devices. The device 300 can access a wireless network based on communication standards, such as WiFi, 2G or 3G, or combinations thereof. In an exemplary embodiment, the communication component 316 receives a broadcast signal or broadcast related information from an external broadcast management system via a broadcast channel. In an exemplary embodiment, the communication component 316 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the device 300 may be implemented by one or more application-specific integrated circuits (ASIC), digital signal processors (DSP), digital signal processing devices (DSPD), programmable logic devices (PLD), field programmable gate arrays (FPGA), controllers, micro-controllers, micro-processors or other electronic components, for executing the above-mentioned method.

In an exemplary embodiment, a non-transitory computer-readable storage medium including instructions is further provided, such as the memory 304 including instructions, where the instructions can be executed by a processor 320 of the device 300 to complete the above-mentioned delay determination method. For example, the non-transitory computer-readable storage medium may be an ROM, a random access memory (RAM), a CD-ROM, a magnetic tape, a floppy disk, an optical data storage device, etc.

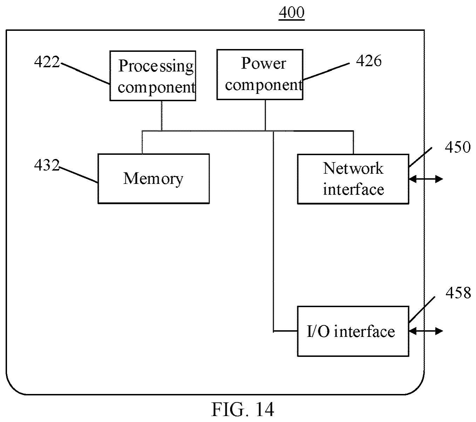

FIG. 14 is a schematic diagram of a second communication device according to an exemplary embodiment. For example, a device 400 can be provided as a network device. Referring to FIG. 14, the device 400 includes a processing component 422, which further includes one or more processors, and memory resources represented by a memory 432 for storing instructions that can be executed by the processing component 422, such as application programs. An application program stored in the memory 432 may include one or more modules each corresponding to a set of instructions. In addition, the processing component 422 is configured to execute instructions to perform the method described above.

The device 400 may further include a power component 426 configured to perform power management of the device 400, a wired or wireless network interface 450 configured to connect the device 400 to a network, and an input-output (I/O) interface 458. The device 400 can operate based on an operating system stored in the memory 432, such as Windows ServerTM, Mac OS XTM, UnixTM, LinuxTM, FreeBSDTM or the like.

In an exemplary embodiment, a non-transitory computer-readable storage medium including instructions is further provided, such as the memory 432 including instructions, where the instructions can be executed by the processing component 422 of the device 400 to complete the above-mentioned method. For example, the non-transitory computer-readable storage medium may be an ROM, a random access memory (RAM), a CD-ROM, a magnetic tape, a floppy disk, an optical data storage device, etc.

The implementations or embodiments of the present disclosure are not exhaustive, but only schematic illustrations of some implementations or embodiments, and are not taken as specific limitations on the protection scope of the present disclosure. In the case of no contradiction, each step in a certain implementation or embodiment can be implemented as an independent embodiment, and the steps can be arbitrarily combined. For example, a solution after removing some steps in a certain implementation or embodiment can also be implemented as an independent embodiment, and the order of each step in a certain implementation or embodiment can be arbitrarily exchanged. In addition, the optional ways or optional examples in a particular implementation or embodiment may be arbitrarily combined. In addition, various embodiments or examples can be arbitrarily combined, for example, some or all steps of different embodiments or examples can be arbitrarily combined, and one embodiment or example can be arbitrarily combined with optional ways or optional examples of other implementations or embodiments.

It can be further understood that "plurality" in the present disclosure means two or more, and other quantifiers are similar. "And/or", which describes the relationship of related objects, means that there can be three kinds of relationships, for example, A and/or B, which can mean that A exists alone, A and B exist together, and B exists alone. The character "/" generally indicates that the associated object is an "or" relationship. Singular forms of "a", "said", and "the" are also intended to include majority forms, unless the context clearly indicates otherwise.

The description methods of "A or B", "A and/or B", "at least one of A or B", "A in one case, B in another case", "in response to one case A, in response to another case B" and the like in the present disclosure may include at least one of the following technical solutions according to the situation: executing A independently of B, that is, A in some implementations or embodiments; executing B independently of A, that is, B in some implementations or embodiments; selectively executing A and B, that is, selecting to execute from A and B in some implementations or embodiments; executing both A and B, that is, A and B in some implementations or embodiments.

It can be further understood that in the present disclosure, "in response to ...", "in the case of ...", "at the time of ...", "when ...", "if ...", "in a case that ...", etc. can be replaced with each other.

It can be further understood that the terms "first", "second", etc. may be used to describe various information, but this information should not be limited to these terms. These terms are used only to distinguish the same type of information from one another and do not indicate a specific order or degree of importance. In fact, expressions such as "first" and "second" can be used interchangeably. For example, without departing from the scope of the present disclosure, first information can also be called second information, and similarly, the second information can also be called the first information.

In some implementations or embodiments, "including A", "including A", "used to indicate A", and "carrying A" in the present disclosure can be interpreted as directly carrying A or indirectly indicating A.

In addition, each element, each row, or each column in the table involved in the present disclosure can be implemented as an independent embodiment, and the combination of any element, any row, and any column can also be implemented as an independent embodiment.

It can be further understood that although the operations are described in a specific order in the accompanying drawings in the embodiments of the present disclosure, it should not be understood as requiring that these operations be performed in the specific order or serial order shown, or that all the operations shown should be performed to obtain the desired results. In certain circumstances, multitasking and parallel processing may be beneficial.

Other embodiments of the present disclosure will easily occur to those skilled in the art after considering the specification and practicing the present disclosure disclosed herein. The present disclosure is intended to cover any variations, uses or adaptations of the present disclosure, and these variations, uses or adaptations follow general principles of the present disclosure and include common sense or common technical means in the technical field that are not disclosed in the present disclosure.

It should be understood that the present disclosure is not limited to precise structures described above and shown in the accompanying drawings, and various modifications and changes can be made without departing from its scope. The scope of the present disclosure is limited only by the appended claims.

## Claims

1. A reference signal transmission method, performed by a terminal and comprising:
determining that a maximum number of antenna groups for the terminal is 4 and a maximum number of phase tracking reference signal, PTRS, ports is N, wherein N is a positive integer;
determining that downlink control information, DCI, does not comprise a PTRS-demodulation reference signal, DMRS, association indication field and a transmission rank indication, TRI, indicated by the DCI is greater than 1;
determining an association between M PTRS ports and DMRS ports, wherein the M PTRS ports are for the terminal actually transmitting PTRS reference signals, and M is a positive integer less than or equal to the N; and
sending one or more PTRS reference signals based on the DMRS ports respectively associated with the M PTRS ports.

2. The method according to claim 1, wherein the N is determined to be 4 and the M is determined to be 1, and the association between the M PTRS ports and the DMRS ports comprises at least one of:
a number of codewords transmitted by the terminal is 1, and a PTRS port is associated with a DMRS port having a smallest DMRS port index among all of the DMRS ports;
a number of codewords transmitted by the terminal is 1, and a PTRS port is associated with a DMRS port having a smallest DMRS port index in a DMRS port group sharing the PTRS port;
a number of codewords transmitted by the terminal is 2, and a PTRS port is associated with a DMRS port having a smallest DMRS port index in a DMRS port group that shares the PTRS port and corresponds to a codeword with a higher modulation and coding style, MCS, level;
a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

3. The method according to claim 1, wherein the N is determined to be 4 and the M is greater than 1, and the association between the M PTRS ports and the DMRS ports comprises at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, wherein different PTRS ports in the T groups of PTRS ports are associated with different DMRS ports in different DMRS port groups, wherein each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

4. The method according to any one of claims 1 to 3, wherein the M PTRS ports for the terminal actually transmitting PTRS reference signals are determined according to a transmission mode adopted by the terminal for uplink transmission, and the transmission mode adopted by the terminal for uplink transmission comprises a codebook-based physical uplink shared channel, PUSCH, transmission or a non-codebook-based PUSCH transmission.

5. The method according to claim 4, wherein the transmission mode adopted by the terminal for uplink transmission comprises the codebook-based PUSCH transmission, and the method further comprises:
receiving transmission precoding matrix indicator, TPMI, information; and
determining the M PTRS ports based on one or more antenna port groups corresponding to actual transmission layers indicated by the TPMI information.

6. The method according to claim 4, wherein the transmission mode adopted by the terminal for uplink transmission comprises the non-codebook-based PUSCH transmission, and the method further comprises:
receiving sounding reference signal resource indicator, SRI, information; and
determining the M PTRS ports and DMRS port groups respectively corresponding to the M PTRS ports based on PTRS port indexes respectively corresponding to sounding reference signal, SRS, resources indicated by the SRI information.

7. The method according to any one of claims 1 to 6, further comprising:
sending capability information, wherein the capability information indicates that a maximum number of PTRS ports supported by the terminal is the N.

8. The method according to any one of claims 1 to 7, further comprising:
receiving configuration information, wherein the configuration information is used for configuring the maximum number of PTRS ports for the terminal.

9. The method according to any one of claims 1 to 8, wherein a PUSCH type corresponding to an uplink transmission of the terminal comprises at least one of:
scheduling-based PUSCH;
grant-free PUSCH type 1; or
grant-free PUSCH type 2.

10. A reference signal transmission method, performed by a network device and comprising:
determining that a maximum number of phase tracking reference signal, PTRS, ports is N and a number of PTRS ports for a terminal actually transmitting PTRS reference signals is M, wherein N is a positive integer and M is a positive integer less than or equal to the N;
sending downlink control information, DCI, wherein the DCI does not comprise a PTRS-demodulation reference signal, DMRS, association indication field and a transmission rank indication, TRI, indicated by the DCI is greater than 1;
determining an association between M PTRS ports and DMRS ports based on the DMRS ports respectively corresponding to the M PTRS ports; and
receiving one or more PTRS reference signals based on the DMRS ports respectively associated with the M PTRS ports.

11. The method according to claim 10, wherein the N is determined to be 4 and the M is determined to be 1, and the association between the M PTRS ports and the DMRS ports comprises at least one of:
determining that a number of codewords transmitted by the terminal is 1, and a PTRS port is associated with a DMRS port having a smallest DMRS port index among all of the DMRS ports;
determining that a number of codewords transmitted by the terminal is 1, and a PTRS port is associated with a DMRS port having a smallest DMRS port index in a DMRS port group sharing the PTRS port;
determining that a number of codewords transmitted by the terminal is 2, and a PTRS port is associated with a DMRS port having a smallest DMRS port index in a DMRS port group sharing the PTRS port corresponding to a codeword with a higher modulation and coding style, MCS, level;
determining that a number of codewords transmitted by the terminal is 2 and MCS levels of different codewords are identical, and a PTRS port is associated with a DMRS port having a smallest DMRS port index in a DMRS port group corresponding to a first codeword CW0; or
a number of codewords transmitted by the terminal is 1 or 2, and a PTRS port is associated with a DMRS port corresponding to any DMRS index in a DMRS port group sharing the PTRS port.

12. The method according to claim 10, wherein the N is determined to be 4 and the M is greater than 1, and the association between the M PTRS ports and the DMRS ports comprises at least one of:
each of the M PTRS ports is associated with a DMRS port having a smallest DMRS port index in a DMRS port group sharing the each PTRS port;
dividing, according to PTRS port index order, the M PTRS ports into T groups of PTRS ports, wherein different PTRS ports in the T groups of PTRS ports are associated with different DMRS ports in different DMRS port groups, wherein each DMRS port group in different DMRS port groups shares a same PTRS port, and T is a positive integer less than or equal to the M; or
each of the M PTRS ports is associated with a DMRS port corresponding to any fixed DMRS port index in a DMRS port group sharing the each PTRS port.

13. The method according to any one of claims 10 to 12, further comprising:
determining that a transmission mode adopted by the terminal for uplink transmission is a codebook-based physical uplink shared channel, PUSCH, transmission, and sending transmission precoding matrix indicator, TPMI, information, wherein the TPMI information indicates the M PTRS ports.

14. The method according to any one of claims 10 to 12, further comprising:
determining that a transmission mode adopted by the terminal for uplink transmission is a non-codebook-based physical uplink shared channel, PUSCH, transmission, and sending sounding reference signal resource indicator, SRI, information, wherein the SRI information indicates the M PTRS ports and DMRS port groups respectively corresponding to the M PTRS ports.

15. The method according to any one of claims 10 to 14, further comprising:
receiving capability information, wherein the capability information indicates that a maximum number of PTRS ports supported by the terminal is the N.

16. The method according to any one of claims 10 to 15, further comprising:
sending configuration information, wherein the configuration information is used for configuring the maximum number of PTRS ports.

17. The method according to any one of claims 10 to 16, wherein a PUSCH type corresponding to an uplink transmission of the terminal comprises at least one of:
scheduling-based PUSCH;
grant-free PUSCH type 1; or
grant-free PUSCH type 2.

18. A first reference signal transmission apparatus, comprising:
a processing module, configured to determine that a maximum number of antenna groups for the terminal is 4 and a maximum number of phase tracking reference signal, PTRS, ports is N, wherein N is a positive integer;
the processing module is further configured to determine that downlink control information, DCI, does not comprise a PTRS-demodulation reference signal, DMRS, association indication field and a transmission rank indication, TRI, indicated by the DCI is greater than 1;
the processing module is further configured to determine an association between M PTRS ports and DMRS ports, wherein the M PTRS ports are for the terminal actually transmitting PTRS reference signals, and M is a positive integer less than or equal to the N; and
a sending module, configured to send one or more PTRS reference signals based on the DMRS ports respectively associated with the M PTRS ports.

19. A second reference signal transmission apparatus, comprising:
a processing module, configured to determine that a maximum number of phase tracking reference signal, PTRS, ports is N and a number of PTRS ports for a terminal actually transmitting PTRS reference signals is M, wherein N is a positive integer and M is a positive integer less than or equal to the N;
a sending module, configured to send downlink control information, DCI, wherein the DCI does not comprise a PTRS-demodulation reference signal, DMRS, association indication field and a transmission rank indication, TRI, indicated by the DCI is greater than 1;
the processing module is further configured to determine an association between M PTRS ports and DMRS ports based on the DMRS ports respectively corresponding to the M PTRS ports; and
the receiving module is configured to receive one or more PTRS reference signals based on the DMRS ports respectively associated with the M PTRS ports.

20. A first communication device, comprising:
one or more processors; and
a memory, configured to store processor-executable instructions;
wherein the one or more processors are configured to execute the reference signal transmission method according to any one of claims 1 to 9.

21. A second communication device, comprising:
one or more processors; and
a memory, configured to store processor-executable instructions;
wherein the one or more processors are configured to execute the reference signal transmission method according to any one of claims 10 to 17.

22. A storage medium, wherein instructions are stored in the storage medium, and when the instructions in the storage medium are executed by one or more processors of a terminal, the terminal is enabled to execute the reference signal transmission method according to any one of claims 1 to 9; or, when the instructions in the storage medium are executed by one or more processors of a network device, the network device is enabled to execute the reference signal transmission method according to any one of claims 10 to 17.

23. A communication system, comprising a terminal and a network device, wherein
the terminal is configured to execute the method according to any one of claims 1 to 9; and
the network device is configured to execute the method according to any one of claims 10 to 17.
